# EUROPEAN PATENT APPLICATION

(11) **EP 4 646 003 A1**
(43) Date of publication of application: **05.11.2025**
(21) Application number: 24870020.5
(22) Date of filing: 19.07.2024
(51) Int. Cl.: H04W 74/00

(54) **EARLY ASSISTANCE INFORMATION REPORTING METHOD AND APPARATUS**

(30) Priority: 28.09.2023 CN 202311275815
(71) Applicant: ZTE CORPORATION, Shenzhen, Guangdong 518057 (CN)
(72) Inventor: QIU, Zhihong, Shenzhen, Guangdong 518057 (CN); HUANG, He, Shenzhen, Guangdong 518057 (CN); GAO, Yuan, Shenzhen, Guangdong 518057 (CN); VUTUKURI, Eswar Kalyan, PO9 2FN HAVANT, HAMPSHIRE (GB)
(74) Representative: Vossius & Partner Patentanwälte Rechtsanwälte mbB
(86) International application number: PCT/CN2024/106509
(87) International publication number: WO 2025/066465

(57) **Abstract**

Embodiments of the present disclosure provide early assisting information report method and apparatus. The method includes: receiving, from a base station, configuration information relevant to early assisting information report; and sending a Media Access Control Protocol Data Unit (MAC PDU) to the base station according to the configuration information, where the MAC PDU includes a specific MAC subheader carrying an early assisting information field.

## Description

### Cross-Reference to Related Application

The present disclosure is based upon and claims priority to Chinese Patent Application No. CN202311275815.6 filed on September 28, 2023 and entitled "Early Assistance Information report Method and Apparatus", the disclosure of which is hereby incorporated by reference in its entirety.

### Technical Field

The present disclosure relates to the field of communications, and specifically, to an method and apparatus for reporting early assisting information.

### Background

In the current wireless communication system, a User Equipment (UE) reports assisting information (e.g., UE capabilities) to a Network (NW) after connecting to the NW to assist better scheduling of the UE.

In an aspect, Normally, the report of UE capabilities happens after UE has established connection to NW successfully, but there are some cases that require UE to report its capability in PUSCH transmission during RACH procedure. One example is that for Non-Terrestrial Network (NTN), due to limited link budget in the downlink, NW may decide to allow repeated (re)transmission of acknowledgement for Msg4 or MsgB. To achieve this purpose NW needs to know UE's capability to support this action, therefore a method needs to be specified for UE to report the capability before scheduling of Msg4 or MsgB. One possible method is to deliver such information in Msg3 or MsgA payload. In another aspect, since the size of a Physical Uplink Shared Channel (PUSCH) message will impact the overall coverage of RACH, the UE needs to transmit UE capability information in PUSCH transmission during RACH procedure does not enlarge the message size.

In the related art, assisting information may be indicated by using a Logical Channel IDentify (LCID) in the Msg3/MsgA. However, the method also has many defects: first, the current standards developed by the 3rd Generation Partnership Project (3GPP) organization, where the number of coding points reserved by the LCID is limited, and as the requirements of the UE for reporting the assisting information during the RACH procedure continues to grow, the remaining LCID coding points may be quickly depleted. Second, since the LCID includes two Common Control Channels (CCCHs) with different sizes, in order to distinguish the two situations, two LCIDs needs to be used to indicate the assisting information. Third, considering that a variety of pieces of assisting information may be required to be indicated in the Msg3/MsgA in the future, in order to support a combination of all assisting information, assuming that there are x types of assisting information, up to 2^x-1 additional coding points may be required for indication, accelerating the consumption of the remaining LCID coding points. The flexibility is relatively poor when a combination of a plurality of groups of assisting information is indicated.

To sum up, there is no good solution yet to the problem of limited number of the coding points of the LCID and poor flexibility with respect to the indication of the assisting information during the RACH procedure by using the current LCID bit in the related art.

### Summary

Embodiments of the present disclosure provide an early assisting information report method and apparatus, so as to at least solve the problem of limited number of coding points of an LCID and poor flexibility with respect to the indication of assisting information during a RACH procedure by using the LCID in the related art.

An embodiment of the present disclosure provides an early assisting information report method, which is applied to a terminal. The method includes: configuration information relevant to early assisting information report is received from a base station; and an MAC PDU is sent to the base station according to the configuration information, where the MAC PDU includes a specific MAC subheader carrying an early assisting information field.

Another embodiment of the present disclosure provides an early assisting information report method, which is applied to a base station. The method includes: configuration information relevant to early assisting information report is sent to a terminal; and an MAC PDU sent by the terminal according to the configuration information is received, where the MAC PDU includes a specific MAC subheader carrying an early assisting information field.

An embodiment of the present disclosure provides an early assisting information report method, which is applied to a terminal. The method includes: configuration information relevant to early assisting information report is received from a base station; and an early assisting message carrying early assisting information is sent to the base station according to the configuration information.

Another embodiment of the present disclosure further provides an early assisting information report method, which is applied to a base station. The method includes: configuration information relevant to early assisting information report is sent to a terminal; and an early assisting message carrying early assisting information and sent by the terminal according to the configuration information is received.

Another embodiment of the present disclosure provides a terminal, which is configured to receive, from a base station, configuration information relevant to early assisting information report; and send an MAC PDU to the base station according to the configuration information, where the MAC PDU includes a specific MAC subheader carrying an early assisting information field.

Another embodiment of the present disclosure provides a base station, which is configured to send, to a terminal, configuration information relevant to early assisting information report; and receive an MAC PDU sent by the terminal according to the configuration information, where the MAC PDU includes a specific MAC subheader carrying an early assisting information field.

Another embodiment of the present disclosure provides a terminal, which is configured to receive, from a base station, configuration information relevant to early assisting information report; and send an early assisting message carrying early assisting information to the base station according to the configuration information.

Another embodiment of the present disclosure further provides a base station, which is configured to send configuration information relevant to early assisting information report to a terminal; and receive an early assisting message carrying early assisting information and sent by the terminal according to the configuration information.

Yet another embodiment of the present disclosure further provides a computer-readable storage medium. The storage medium stores a computer program. Steps in any one of the above method embodiments are executed when the computer program is run by a processor.

Yet another embodiment of the present disclosure further provides an electronic apparatus. The electronic apparatus includes a memory and a processor. The memory stores a computer program. The processor is configured to run the computer program to execute steps in any one of the above method embodiments.

### Brief Description of the Drawings

Fig. 1 is a block diagram of a hardware structure of an early assisting information report method according to embodiments of the present disclosure.
Fig. 2 is a flowchart (I) of an early assisting information report method according to embodiments of the present disclosure.
Fig. 3 is a flowchart (II) of an early assisting information report method according to embodiments of the present disclosure.
Fig. 4 is a flowchart of a contention-based RACH procedure with four steps according to embodiments of the present disclosure.
Fig. 5 is a flowchart of a contention-based RACH procedure with two steps according to embodiments of the present disclosure.
Fig. 6 is a schematic structural diagram (I) of a specific MAC subheader according to embodiments of the present disclosure.
Fig. 7 is a schematic structural diagram (II) of a specific MAC subheader according to embodiments of the present disclosure.
Fig. 8 is a schematic structural diagram (III) of a specific MAC subheader according to embodiments of the present disclosure.
Fig. 9 is a schematic structural diagram (IV) of a specific MAC subheader according to embodiments of the present disclosure.
Fig. 10 is a schematic structural diagram (V) of a specific MAC subheader according to embodiments of the present disclosure.
Fig. 11 is a schematic structural diagram (VI) of a specific MAC subheader according to embodiments of the present disclosure.
Fig. 12 is a flowchart (III) of an early assisting information report method according to embodiments of the present disclosure.
Fig. 13 is a flowchart of a 4-step RACH according to embodiments of the present disclosure.
Fig. 14 is a flowchart of a 2-step RACH according to embodiments of the present disclosure.
Fig. 15 is a flowchart of a 4-step RACH according to another embodiment of the present disclosure.
Fig. 16 is a schematic structural diagram of an MAC subheader of an MAC CE for identifying C-RNTI according to embodiments of the present disclosure.

### Detailed Description of the Embodiments

The embodiments of the present disclosure are described below in detail with reference to the drawings and the embodiments.

It is to be noted that terms "first", "second" and the like in the description, claims and the above mentioned drawings of the present disclosure are configured to distinguish similar objects rather than describing a specific sequence or a precedence order.

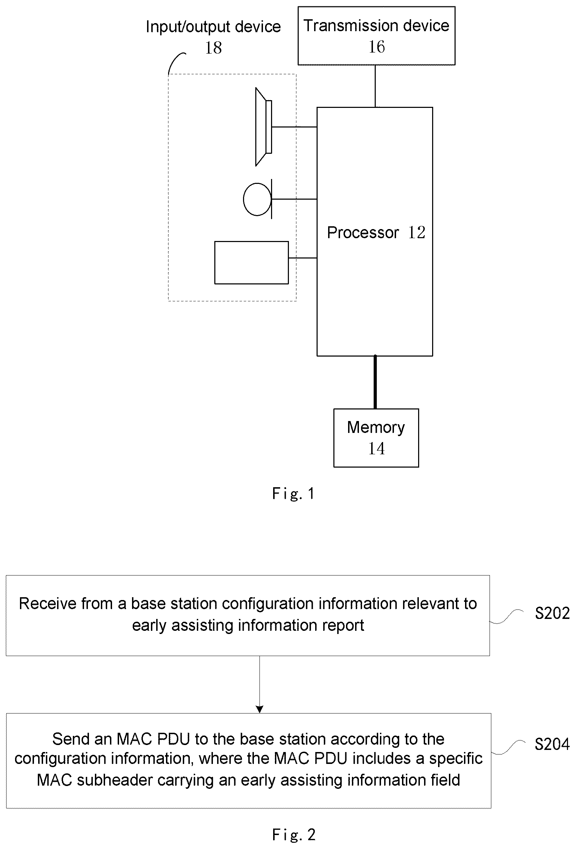

The method embodiments provided in the embodiments of the present disclosure may be executed in a mobile terminal, a computer terminal or a similar computing apparatus. By being operated on the mobile terminal as an example, Fig. 1 is a block diagram of a hardware structure of an early assisting information report method according to embodiments of the present disclosure. As shown in Fig. 1, a hardware single board may include one or more (only one is shown in Fig. 1) processors 12 (the processor 12 may include, but is not limited to, a processing apparatus such as a microprocessor MCU or a programmable logic device) and a memory 14 configured to store data. The above mobile terminal may further include a transmission device 16 configured to achieve a communication function, and an input/output device 18. Those skilled in the art may understand that the structure shown in Fig. 1 is only a schematic diagram, which does not limit the structure of the above mobile terminal. For example, the mobile terminal may also include more or less components than those shown in Fig. 1, or have a different configuration from that shown in Fig. 1.

The memory 14 may be configured to store a computer program, for example, a software program and a module of application software, such as a computer program corresponding to an early assisting information report method in the embodiments of the present disclosure. The processor 12 runs the computer program stored in the memory 14, so as to execute various functional applications and early assisting information report method, that is, to realize the above method. The memory 14 may include a high-speed random access memory, and may further include a non-transitory memory, such as one or more magnetic disk memory apparatuses, a flash memory device, or other non-transitory solid-state memory devices. In some embodiments, the memory 14 may further include memories remotely disposed relative to the processor 12. The remote memories may be connected to the mobile terminal by using an NW. Examples of the above NW include, but are not limited to, the Internet, an intranet, a local area NW, a mobile communication NW, and a combination thereof.

The transmission device 16 is configured to receive or transmit data via an NW. The specific example of the above NW may include a wireless NW provided by a communication provider. In an example, the transmission device 16 includes a Network Interface Controller (NIC), and may be connected to other NW devices by using a base station, so as to communicate with the Internet. In an example, the transmission device 16 is a Radio Frequency (RF) module, which is configured to communicate with the Internet in a wireless Alternative.

An embodiment of the present disclosure provides an early assisting information report method, which is applied to a terminal. Fig. 2 is a flowchart (I) of early assisting information report method according to embodiments of the present disclosure. As shown in Fig. 2, the flow includes the following steps.

At S202, configuration information relevant to early assisting information report is received from a base station.

At S204, an MAC PDU is sent to the base station according to the configuration information, wherein the MAC PDU includes a specific MAC subheader carrying an early assisting information field.

In this embodiment of the present disclosure, the specific MAC subheader for indicating early assisting information is designed through S202 to S204. The terminal may set a field in the specific MAC subheader based on configuration of an NW with respect to whether the terminal supports each feature, such that the problem of limited number of coding points of an LCID and poor flexibility with respect to the indication of assisting information during a RACH procedure by using the LCID in the related art may be solved.

In some embodiments, the MAC subheader is configured to identify a CCCH message, and the CCCH message is sent to the base station by a UE through a PUSCH. The UE can set a field (i.e., the early assisting information field) indicating whether the UE supports each feature in the MAC subheader that identifies the CCCH message.

In some embodiments, the specific MAC subheader carrying the early assisting information may also be configured to identify a DCCH message.

In the embodiments of the present disclosure, the base station needs to send the configuration information to the UE, such that the UE knows that the base station can decode the specific MAC subheader configured to indicate the early assisting information, or the base station allows the UE to use the specific MAC subheader to identify the CCCH message. The specific MAC subheader includes the early assisting information field (e.g., one or more pieces of UE capability-related information).

In this embodiment, the UE is the terminal, and includes, but is not limited to, a mobile terminal, a computer terminal, etc.

In some embodiments, the early assisting information may include one or more UE capability-related information. The UE capability indicates whether the UE supports one feature or one function, and the specific content of the early assisting information is not limited in the present disclosure.

Further, the early assisting information may also be replaced with other terms, such as early terminal information, an early terminal identifier, an early terminal indication, etc., which is not limited in the present disclosure.

In some embodiments, the early assisting information may include, but is not limited to any one piece of the following information or a combination of any information.

Indication information for indicating whether the UE supports or requests an automatic repeat request against a PUCCH of Msg4HARQ-ACK.

Indication information for indicating whether the UE is a UE with a Reduced Capability (RedCap) (e.g., RedCap UE).

Indication information for indicating whether the UE is a UE with an Enhanced Reduced Capability (e.g., eRedCap UE).

Indication information for indicating whether the UE is temporarily restricted.

Indication information for indicating whether the UE supports a specific UE capability.

Indication information for indicating that a RACH procedure is triggered by a specific reason.

Indication information for indicating that an initial access process is triggered by a specific reason.

In this embodiment, Msg4 is a fourth-step message during a four-step RACH procedure; the HARQ-ACK is short for Hybrid Automatic Repeat Request-ACKnowledgement; and the PUCCH is short for Physical Uplink Control CHannel.

In an exemplary embodiment, indicating whether the UE capability is temporarily restricted may be used in a scenario in which the UE supports a plurality of SIMs. In the scenario, the capability (e.g., a supported frequency band combination, and the capability of supporting a dual connection) of the UE may be temporarily restricted under some conditions. For example, when the UE has established a Radio Resource Control (RRC) connection with an NW1 in one SIM card and the UE is using another SIM card to establish or restore an RRC connection with an NW2, the capability of the Multiple Subscriber Identity Module (MUSIM) UE to support a plurality of MUSIMs may be temporarily restricted.

In some embodiments, the configuration information includes: an explicit indication and/or an implicit indication for indicating whether the specific MAC subheader is enabled.

In an exemplary embodiment, the explicit indication may include a clear instruction for indicating whether the UE is allowed to use the above specific MAC subheader.

In some embodiments, the implicit indication includes at least one of the following.

Automatic repeat request configuration information of Msg4 HARQ-ACK.

Temporary capability limitation related configuration information of a Multi User Identification Module (MUSIM) terminal.

Reduced Capability (RedCap) terminal configuration information.

Enhanced Reduced Capability (eRedCap) terminal configuration information.

Random Access Channel (RACH) resource configuration information dedicated to early assisting information report;
A mapping relationship between a specific MAC subheader format and a RACH resource.

Terminal capability information.

RACH procedure trigger information (e.g., a triggering cause).

Initial access process trigger information (e.g., the triggering cause, and a purpose of initiating the process).

In an exemplary embodiment, the explicit indication and the implicit indication may be used in combination. The explicit indication may be configured to enable the specific MAC subheader; and the implicit indication may be configured to assist the UE in determining the content of related early assisting information reported in the specific MAC subheader.

In an exemplary embodiment, the automatic repeat request configuration information may include at least one of the following.

An Enable indication of the automatic repeat request, which is configured to indicate whether the UE is allowed to send an early indication to support or request the automatic repeat request of the HARQ-ACK. Exemplarily, the sending of the early indication may be limited during the RACH procedure.

A repetition factor of the automatic repeat request, which is configured to indicate the number of times for the automatic repeat request of an ACK message that may be selected by the UE when the HARQ-ACK is sent. Exemplarily, a candidate value of the repetition factor of the automatic repeat request may be {1, 2, 4, 8}.

In an exemplary embodiment, MUSIM temporary capability restriction information may be applied for all RRC states, or may also be limited by some RRC processes, for example, in a process of RRC connection establishment or RRC connection restoration.

In an exemplary embodiment, the RedCap is a bandwidth reduction technique, and the RedCap terminal configuration information may include at least one of the following.

A RedCapUE indication, which is configured to indicate whether RedCapUE may use an RRC message during the RACH procedure to indicate that it is an indication of the RedCapUE, where the RRC message may be particularly designed by providing the early assisting information during the RACH procedure.

A cell barred indication, which is configured to indicate whether a cell is prohibited from being configured for the RedCapUE with 1 or 2 Rx frequency bands, or configured to indicate whether the cell is prohibited from accessing to the RedCapUE with 1 or 2 Rx frequency bands.

A half-duplex indication, which is configured to indicate whether a current cell supports an indication of a half-duplex Frequency Division Duplex/Duplexing (FDD) RedCapUE.

In an exemplary embodiment, the eRedCap is an enhanced bandwidth reduction technique, and the eRedCap terminal configuration information may include at least one of the following.

An eRedCapUE indication, which is configured to indicate whether an eRedCapUE can indicate the eRedCapUE indication is an indication of the eRedCapUE during the RACH procedure.

A cell barred indication, which is configured to indicate whether a cell is prohibited from being configured for the eRedCapUE with 1 or 2 Rx frequency bands, or configured to indicate whether the cell is prohibited from accessing to the eRedCapUE with 1 or 2 Rx frequency bands.

A half-duplex indication, which is configured to indicate whether a current cell supports an indication of a half-duplex FDD eRedCapUE.

In the embodiments of the present disclosure, through the implicit indication in any one of the above embodiments, the terminal may be implicitly notified that the cell allows the UE to use the specific MAC subheader relevant to the early assisting information to identify an MAC Service Data Unit (SDU).

In some embodiments, the configuration information may be configuration information based on a cell, configuration information based on a RACH resource, or configuration information based on a RACH resource set (e.g., RACH resources associated with a Control Element (CE) feature combination), that is, configuration is performed by using the cell as a particle size, or the configuration information is provided according to different RACH resources, or the configuration information is provided according to different RACH resource sets.

In some embodiments, the UE triggers an event to select the corresponding RACH resource according to its own capability (e.g., a functional feature supported by the UE) and/or a triggering cause of the current RACH procedure.

In some embodiments, S202 of receiving, from the base station, the configuration information relevant to early assisting information report includes at least one of the following.

System Information (SI) carrying the configuration information is received from the base station. The SI includes at least one System Information Block 1 (SIB1) message or at least one SIBx, where x is a number of the SIB, for example, x being 22 refers to an SIB22.

A broadcast message carrying the configuration information is received from the base station.

A multicast message carrying the configuration information is received from the base station.

Radio Resource Control (RRC) signalling carrying the configuration information is received from the base station.

A Non-Access Stratum (NAS) message carrying the configuration information is received from the base station.

A page carrying the configuration information is received from the base station.

A short message carrying the configuration information is received from the base station.

MAC signalling carrying the configuration information is received from the base station.

Physical layer signalling carrying the configuration information is received from the base station.

In an exemplary embodiment, when the configuration information is transmitted by using the SI, it may be one or more SIB1 messages or SIBxIEs, where x in the SIBxIE is a positive integer from 2. The SIBxIE may be one or more existing SIBs (e.g., SIB2-SIB21) or a new SIB (e.g., SIB22) introduced.

In an exemplary embodiment, one common SIBx may be configured to indicate one or more indicates in the above embodiments, and the x in the SIBx may be any positive integer, such as SIB1 or SIB22.

In another embodiment, a plurality of pieces of different SI (one or more among the SIB1 messages or SIBxIEs) may be used to indicate the configuration information in any one of the above embodiments. Exemplarily, the SIB1 may include the configuration information for the RedCapUE, the configuration information for the eRedCapUE, the configuration information for the MUSIM terminal, or the explicit indication, such that the terminal can use the specific MAC subheader carrying the early assisting information field. Exemplarily, the SIB19 may include the automatic repeat request configuration information of the HARQ-ACK.

In some embodiments, the specific MAC subheader includes at least one of the following contents.

A flag bit of the specific MAC subheader.

A message type field of a common control channel (CCCH) message.

The early assisting information field.

In an exemplary embodiment, the flag bit is configured to distinguish the specific MAC subheader carrying the early assisting information field and other general MAC subheader without carrying the early assisting information field.

In an exemplary embodiment, the flag bit may be one-bit indication field, such as a C_flag field, which is configured to indicate that the MAC subheader includes the early assisting information field. Exemplarily, if the C_flag field is set to 1, it may indicate that the MAC subheader includes the early assisting information field, and if the C_flag field is set to 0, it may indicate that the MAC subheader does not include the early assisting information field, or vice versa, the present disclosure is not limited thereto. In some embodiments, the field can only be arranged in a first position on the left side, so as to distinguish it from a field for identify a subheader carrying indefinite-length MAC subPDUs.

In some embodiments, a message type of the CCCH message includes at least one of the following and a possible combination.

A 48-Bit CCCH or a 64-bit CCCH1.

A CCCH for a RedCap terminal or a CCCH for a non-RedCap terminal.

In an exemplary embodiment, a classification mode of the CCCH message may be different, for example, may be classified into a 48-bit CCCH and a 64-bit CCCH1 according to a message size. Alternatively, a CCCH message for the RedCapUE and a CCCH message for a non-RedCapUE may be classified according to whether the UE supports the RedCap; the RedCapUE is a terminal supporting the RedCap, and the non-RedCapUE is a terminal not supporting the RedCap.

In an exemplary embodiment, the message type of the CCCH message may be a one-bit indication field. Exemplarily, the field is set to 0 to indicate that a CCCH category is a CCCH, and the field is set to 1 to indicate that the CCCH category is a CCCH1, or vice versa, the present disclosure is not limited thereto.

In an exemplary embodiment, the message type of the CCCH message may be a two-bit indication field to allow the distinguishing of the CCCH messages for the ReCapUE and the non-RedCapUE, as well as CCCH message sizes. The two-bit indication field may indicate 4 values {00, 01, 10, 11}, and each value may be mapped into {the CCCH of the non-RedCapUE, the CCCH1 of the non-RedCapUE, the CCCH of the RedCapUE, and the CCCH1 of the RedCapUE} one to one. A mapping rule may be shown in Table 1 below, but the present disclosure is not limited thereto.

**Table 1:**

| CCCH message type indication (2-bit) | Interpretation |
|---|---|
| 00 | CCCH of non-RedCap UE |
| 01 | CCCH1 of non-RedCap UE |
| 10 | CCCH of RedCap UE |
| 11 | CCCH1 of RedCap UE |

In some embodiments, an indication mode of the early assisting information field includes at least one of the following.

The early assisting information field comprising at least one piece of bit information, where each piece of the bit information indicates one piece of early assisting information.

A value of the early assisting information field being determined by a formula including the early assisting information field of at least one sub-field, where each sub-field indicates one piece of the early assisting information, and the formula of the early assisting information field is determined based on a value of the at least one sub-field and the number of candidate values of each sub-field.

An early assisting information field indicating LCID index, where the LCID index is configured to indicate one or more pieces of the early assisting information.

In some embodiments, the early assisting information field may also include one or more bits of reserved bits for future expansion, and a value of each reserved bit is 0.

In some embodiments, the early assisting information field may include n bits, and each bit identifies one piece of early assisting information (e.g., UE capability-related information). Exemplarily, each bit may indicate whether the UE supports a feature or function.

In the embodiments of the present disclosure, after an NW side successfully receives information reported by the UE, a value of each sub-field (each feature) may be reversely calculated based on different indication modes and the value of the corresponding early assisting information field, so as to calculate early assisting information content reported by the UE, thereby achieving the purpose of indicating the early assisting information through the MAC subheader.

In some embodiments, a formula of the early assisting information field includes the following values.

The value of the early assisting information field = a value of a first sub-field+a value of a second sub-field*the number of candidate values of the first sub-field+a value of a third sub-field*(the number of candidate values of the second sub-field+the number of candidate values of the first sub-field)+...+a value of nth sub-field*(the number of candidate values of (n-1)th sub-field+...+the number of candidate values of the second sub-field+the number of candidate values of the first sub-field)), wherein n is a positive integer.

In some embodiments, the early assisting information includes at least one of the following.

Indication information for indicating whether the terminal supports or requests an automatic repeat request against a PUCCH of Msg4 HARQ-ACK.

Indication information for indicating whether the terminal capability of the terminal is temporarily restricted.

Indication information for indicating whether the terminal supports RedCap.

Indication information for indicating whether the terminal supports eRedCap.

In some embodiments, the MAC PDU includes one or more MAC subPDUs, and each MAC subPDU is comsists of one of the following:
An MAC subheader.

The MAC subheader and an MAC SDU.

The MAC subheader and an MAC CE.

The MAC subheader and padding.

In this embodiment, when the early assisting information needs to be transmitted, any MAC subheader in the MAC PDU may be the specific MAC subheader carrying the early assisting information field.

In some embodiments, the specific MAC subheader may be the MAC subheader that is configured to identify the MAC SDU, and is sent in a common control logical channel.

In some embodiments, the specific MAC subheader may be the MAC subheader that is configured to identify the MAC CE for early assisting information report.

In some embodiments, the MAC CE for early assisting information report may only carry the specific MAC subheader, and does not carry a load.

In some embodiments, an MAC subheader carrying indication is configured to identify the MAC CE for early assisting information report, and in this case, the early assisting information field may be included in a load of the MAC subPDU, that is, in the content of the MAC CE, rather than in the MAC subheader.

In some embodiments, an MAC subheader carrying indication is configured to identify the MAC SDU for early assisting information report, and in this case, the early assisting information field may be included in a load of the MAC subPDU, that is, in the content of the MAC SDU, rather than in the MAC subheader.

In some embodiments, sending the MAC PDU to the base station according to the configuration information includes the following operation.

In a third step (e.g., Msg3) of four-step random access, or in a first step (e.g., a load of MsgA) of two-step random access, the MAC PDU is sent to the base station according to the configuration information.

Through the embodiments of the present disclosure, the UE may be provided with the specific MAC subheader (e.g., the MAC subheader configured to identify the CCCH message) to indicate whether the terminal may support each feature in assisting information, and the early assisting information is transmitted through the PUSCH without increasing the message size, such that the problem of limited number of coding points of an LCID and poor flexibility with respect to the indication of assisting information during a RACH procedure by using the LCID in the related art is solved.

Another embodiment of the present disclosure further provides an early assisting information report method, which is applied to a base station.

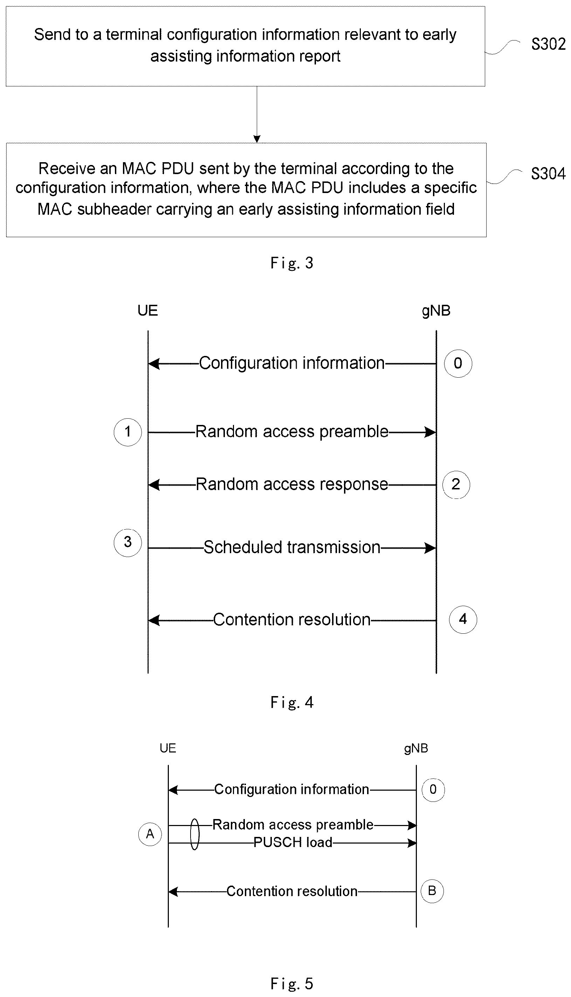

Fig. 3 is a flowchart (II) of an early assisting information report method according to embodiments of the present disclosure. As shown in Fig. 3, the method includes the following steps.

At S302, configuration information relevant to early assisting information report is sent to a terminal.

At S304, an MAC PDU sent by the terminal according to the configuration information is received, where the MAC PDU includes a specific MAC subheader carrying an early assisting information field.

In some embodiments, the UE may send the CCCH message in uplink transmission during the RACH procedure, including the specific MAC subheader carrying the early assisting information field.

In an exemplary embodiment, the CCCH message may specifically include a payload in Msg3 or MsgA. Description is performed below with reference to two contention-based RACH procedure. However, the present disclosure is not limited thereto, and the technical solutions in the present disclosure may also be implemented during a non-contention RACH procedure.

Fig. 4 is a flowchart of a contention-based RACH procedure with four steps according to embodiments of the present disclosure. As shown in Fig. 4, the flow includes the following steps.

At S0, a UE receives, from a base station, configuration information relevant to early assisting information report.

At S1, the UE transmits a random access preamble (Msg1) to the base station.

At S2, the UE receives a random access response (Msg2) from the base station.

At S3, the UE transmits Msg3 to the base station based on NW scheduling.

At S4, the UE receives from the base station Msg4 for contention resolution.

In this embodiment, the Msg3 includes a CCCH message, and the CCCH message in the Msg3 may be identified through an MAC subheader.

In this embodiment, a specific MAC subheader carrying an early assisting information field is disposed, such that the reporting of the early assisting information is realized, for example, whether a terminal supports some capabilities or functions.

In some embodiments, in addition to early assisting information report-related configuration information in step S0, Network (NW) configuration to the terminal by the base station further includes a RACH configuration. The RACH configuration may be sent together with or separately from the configuration information for early assisting information report, and the present disclosure is not limited thereto. In some embodiments, the NW may be used to refer to a base station, a core NW, partial NW element (e.g., a distributed unit element or a centralized element) of the base station, or a functional entity in the NW, such as an Access and Mobility management Function (AMF), Operation Administration and Maintenance (OAM), etc.

Fig. 5 is a flowchart of a contention-based RACH procedure with two steps according to embodiments of the present disclosure. As shown in Fig. 5, the flow includes the following steps.

At S0, a UE receives, from a base station, configuration information relevant to early assisting information report.

At SA, the UE transmits, to a base station, a random access preamble and a PUSCH load (MsgA) including a CCCH message.

At SB, the UE receives, from the base station, MsgB for contention resolution.

In this embodiment, the CCCH message included in the MsgA may be identified through an MAC subheader.

In this embodiment, a specific MAC subheader carrying an early assisting information field is disposed, such that the reporting of the early assisting information is realized, for example, whether a terminal supports some capabilities or functions.

In some embodiments, an NW configuration further includes a RACH configuration. The RACH configuration may be sent together with or separately from the configuration information for early assisting information report, and the present disclosure is not limited thereto.

In an exemplary embodiment of the present disclosure, the base station may send the configuration information to the terminal through an SIB1.

In this embodiment, a structure of the SIB1 is shown as follows.

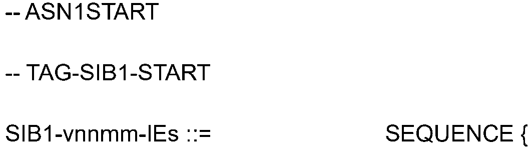

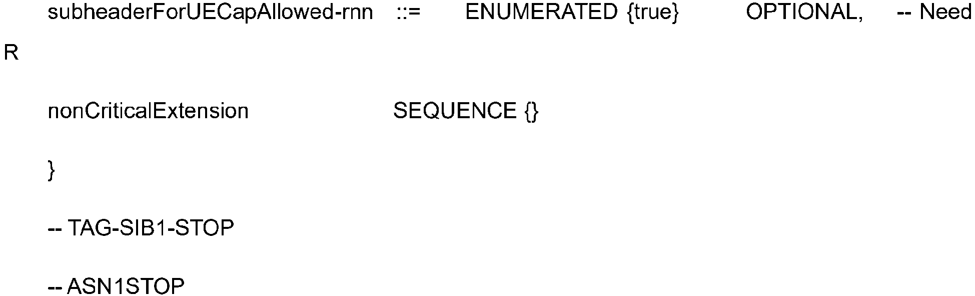

In this embodiment, SIB1-vnnmm refers to the SIB1 defined in a standard. v represents an executed standard version; nn represents a version number of a published standard; and mm represents a mm-th revision of nn-th version, that is, mm-th sub-version of a nn version. Exemplarily, SIB1-v1800 refers to the SIB1 based on 00th revised standard of the 18th edition.

In this embodiment, a new CE subheaderForUECapAllowed-rnn (a subheader for UE capability allowed) is a new field to be introduced in a future standard version.

In this embodiment, the presence of the subheaderForUECapAllowed field is configured to indicate that the UE is allowed to use the specific MAC subheader including the early assisting information field, and the early assisting information field is a field relevant to the early assisting information specified in the standard TS38.321.

In this embodiment, the subheaderForUECapAllowed field is only an example, and other examples may also be earlyUEIndicationAllowed, etc. A field name of the configuration information is not limited in the present disclosure.

In an exemplary embodiment of the present disclosure, the early assisting information field in the specific MAC subheader may include n bits, and each bit may indicate whether the UE supports a feature or function (equivalent to the above bit information).

In an exemplary embodiment, the feature is whether the UE supports or request an automatic repeat request against a PUCCH of Msg4HARQ-ACK. A one-bit sub-field (e.g., a pucchRep field) may be used in the early assisting information field to indicate the UE. Exemplarily, a value of the sub-field being 0 indicates that the UE does not support or request to perform PUCCH repetition for Msg4HARQ-ACK, and the value of the sub-field being 1 indicates that the UE can support or request to perform PUCCH repetition for Msg4HARQ-ACK, or vice versa, the present disclosure is not limited thereto.

In an exemplary embodiment, the feature is whether the UE is a UE (e.g., a RedCap UE) having a RedCap. A one-bit sub-field (e.g., a RedCap field) may be used in the early assisting information field to indicate the UE. Exemplarily, a value of the sub-field being 0 indicates that the UE is not the RedCapUE, and the value of the sub-field being 1 indicates that the UE is the RedCapUE, or vice versa, the present disclosure is not limited thereto.

In some embodiments, when the base station or NW has indicated that a current cell supports the RedCapUE, the indication is optionally present.

In an exemplary embodiment, the feature is whether the UE is a UE (e.g., an eRedCap UE) having an eRedCap. A one-bit sub-field (e.g., an eRedCap field) may be used in the early assisting information field to indicate the UE. Exemplarily, a value of the sub-field being 0 indicates that the UE is not the eRedCapUE, and the value of the sub-field being 1 indicates that the UE is the eRedCapUE, or vice versa, the present disclosure is not limited thereto.

In some embodiments, when the base station or NW has indicated that a current cell supports the eRedCapUE, the indication is optionally present.

In an exemplary embodiment, the feature is whether a UE capability (e.g., an MUSIM UE capability) is temporarily restricted. The one-bit sub-field may be used in the early assisting information field to indicate the UE. Exemplarily, the value of the sub-field being 0 indicates that the UE capability (e.g., the MUSIM UE capability) is not limited, and the value of the sub-field being 1 indicates that the UE capability (e.g., the MUSIM UE capability) is temporarily restricted, or vice versa, the present disclosure is not limited thereto.

In an exemplary embodiment, the value of the sub-field being 0 indicates that temporary limitation to the UE capability (e.g., the MUSIM UE capability) is removed, and the value of the sub-field being 1 indicates that the UE capability (e.g., the MUSIM UE capability) is temporarily restricted, or vice versa, the present disclosure is not limited thereto.

In some embodiments, when the base station or NW has indicated, in the current cell, whether the UE is temporarily restricted, the indication is optionally present.

In an exemplary embodiment of the present disclosure, the value of the early assisting information field may be determined by a formula that is determined based on values of n sub-fields and the number of candidate values of each sub-field.

In an exemplary embodiment, assuming that the early assisting information field is m bits, if an initial value starts from 1, the field may have a maximum value of 2^m, or if the initial value is zero, the field may have a maximum value of 2^m-1.

In an exemplary embodiment, a formula of the early assisting information field having n sub-fields is as follows.

A value of Early assisting information field = sub_field_1+sub_field_2*numOfsub_field_1+sub_field_3*(numOfsub_field_2+numOfsub_field_1)+. ..+sub_field_n*(numOfsub_field_n-1+...+numOfsub_field_2+numOfsub_field_1).

sub_field_1 is a value of a first sub-field relevant to first early assisting information, and the number of candidate values of the first sub-field is numOfsub_field_1; sub_field_2 is a value of a second sub-field relevant to second early assisting information, and the number of candidate values thereof is numOfsub_field_2, and so on; sub_field_n-1 is a value of a (n-1)th sub-field relevant to (n-1)th early assisting information, and the number of candidate values thereof is numOfsub_field_n-1; and sub_field_n is a value of nth sub-field relevant to nth early assisting information, the number of candidate values thereof is numOfsub_field_n.

In an exemplary embodiment, the early assisting information field includes the following three sub-fields relevant to the UE capability.

First sub-field: device type, candidate values being {0, 1, 2}, where each value represents one of the device types of {eRedCapUE, RedCapUE, and UE being non-RedCap and non-eRedCap}. Exemplarily, 0 represents a UE that is neither an eRedCap nor a RedCapUE, 1 represents a RedCapUE, and 2 represents an eRedCapUE. Other correspondence relationships are fine as long as each value is guaranteed to correspond uniquely to each candidate device type, and the present disclosure is not limited thereto.

Second sub-field: a MuSIM indication, an indication that indicates whether the capability of an MUSIMUE is temporarily restricted. The candidate value is 1 or 0. Exemplarily, the indication is set to 1 to indicate that the capability of the MUSIMUE is temporarily restricted, and the indication is set to 0 to indicate that the capability of the MUSIMUE is not temporarily restricted, and vice versa, the present disclosure is not limited thereto.

Third sub-field: an Msg4ACK automatic repeat request indication, indicating whether the UE supports or requests to perform PUCCH repetition for Msg4HARQ-ACK. Exemplarily, a value being 0 indicates that the UE does not support or request to perform PUCCH repetition for Msg4HARQ-ACK, and the value being 1 indicates that the UE can support or have requested to perform PUCCH repetition for Msg4HARQ-ACK, and vice versa, the present disclosure is not limited thereto.

In this embodiment, based on the above three sub-fields, the formula of the early assisting information field may be as follows.

Value of early assisting information field = value of device type+value of MuSIM indication * 3 (the number of candidate values of the device type) + value of Msg4ACK automatic repeat request indication * 3 (the number of candidate values of the device type) *2 (the number of candidate values of the MuSIM indication).

A sequence of the sub-fields is not limited in the embodiments of the present disclosure, as long as a final equation follows the above formula of the early assisting information field having n sub-fields.

In an exemplary embodiment of the present disclosure, the early assisting information field may also indicate one or more pieces of the early assisting information through an LCID index. One LCID index uniquely refers to one early assisting information feature or one early assisting information feature combination.

In this embodiment, an LCID field may be used. The LCID field is particularly configured to identify different logical channels for the CCCH message. Exemplarily, the field may be represented by using an LCID_CCCH.

In an exemplary embodiment, a message category of the CCCH message may include at least one of the following: a CCCH1, a CCCH, or other CCCHs. The LCID_CCCH may have a fixed length of n bits, where n is a positive integer. The LCID_CCCH may indicate an index corresponding to any value within a range from 0 to (2^n-1), and each index may be configured to identify a logical channel type.

In an exemplary embodiment, each index may uniquely indicate any one or a combination of a plurality of pieces of UE capability information, and the UE capability information may include at least one of the following.

Whether the UE can support or have requested to perform PUCCH repetition for Msg4HARQ-ACK.

Whether the UE is a UE with reduced capability (e.g., the RedCap UE).

Whether the UE is a UE with enhanced reduced capability (e.g., the eRedCap UE).

Whether the UE capability (e.g., the MUSIM UE) is temporarily restricted.

In this embodiment, the above 4 types of the UE capability information may be combined arbitrarily. Exemplarily, the UE may be the RedCapUE and support or request to perform PUCCH repetition for Msg4HARQ-ACK.

In an exemplary embodiment, assuming that the LCID field is particularly configured to identify different logical channels for the CCCH message, and for example, the LCID field has a length of 5 bits, as shown in Table 2 and Table 3.

**Table 2:**

| Coding point/index | LCID values |
|---|---|
| 0 | The UE is a UE with reduced capability (e.g., RedCap UE) |
| 1 | The UE is a UE with enhanced reduced capability (e.g., eRedCap UE) |
| 2 | A non-(e)RedCap UE is capable or has request to perform PUCCH repetition for Msg4 HARQ-ACK. |
| 3 | A non-(e)RedCap UE's capability is temporarily restricted |
| 4 | RedCap UE is capable or has request to perform PUCCH repetition for Msg4 HARQ-ACK. |
| 5 | RedCap UE's capability is temporarily restricted |
| 6 | eRedCap UE is capable or has request to perform PUCCH repetition for Msg4 HARQ-ACK |
| 7 | eRedCap UE's capability is temporarily restricted |
| 8 | RedCap UE's capability is temporarily restricted, and it is capable or has request to perform PUCCH repetition for Msg4 HARQ-ACK |
| 9 | eRedCap UE's capability is temporarily restricted, and it is capable or has request to perform PUCCH repetition for Msg4 HARQ-ACK |
| 10 | A non-(e)RedCap UE's capability is temporarily restricted and is capable or has request to perform PUCCH repetition for Msg4 HARQ-ACK. |
| 11...31 | Reserved |

In Table 2, a field to identify CCCH class type is also included in the MAC subheader including above logical channel identity field, and is not indicated by using an LCID. the field to identify CCCH class type is a one bit indication with value zero or 1, each value is used to indicate CCCH or CCCH1. For example, value 0 indicates CCCH, and value 1 indicates CCCH1, or vice versa, the present disclosure is not limited thereto.

**Table 3:**

| Coding point/index | LCID value |
|---|---|
| 0 | CCCH of a UE with reduced capability (e.g., RedCap UE) |
| 1 | CCCH1 of a UE with reduced capability (e.g., RedCap UE) |
| 2 | CCCH of a UE with enhanced reduced capability (e.g., eRedCap UE) |
| 3 | CCCH1 of a UE with enhanced reduced capability (e.g., eRedCap UE) |
| 4 | CCCH of a non-(e)RedCap UE, and it is capable or has request to perform PUCCH repetition for Msg4 HARQ-ACK. |
| 5 | CCCH1 of a non-(e)RedCap UE, and it is capable or has request to perform PUCCH repetition for Msg4 HARQ-ACK. |
| 6 | CCCH of a non-(e)RedCap UE, and its capability is temporarily restricted |
| 7 | CCCH1 of a non-(e)RedCap UE, and its capability is temporarily restricted |
| 8 | CCCH of a RedCap UE, and is capable or has request to perform PUCCH repetition for Msg4 HARQ-ACK. |
| 9 | CCCH1 of a RedCap UE, and is capable or has request to perform PUCCH repetition for Msg4 HARQ-ACK. |
| 10 | CCCH of RedCap UE, and its capability is temporarily restricted |
| 11 | CCCH1 of RedCap UE, and its capability is temporarily restricted |
| 12 | CCCH of eRedCap UE, and it is capable or has request to perform PUCCH repetition for Msg4 HARQ-ACK. |
| 13 | CCCH1 of eRedCap UE, and it is capable or has request to perform PUCCH repetition for Msg4 HARQ-ACK. |
| 14 | CCCH of a eRedCap UE, and its capability is temporarily restricted |
| 15 | CCCH1 of a eRedCap UE, and its capability is temporarily restricted |
| 16 | CCCH of a RedCap UE, and its capability is temporarily restricted, and it is capable or has request to perform PUCCH repetition for Msg4 HARQ-ACK |
| 17 | CCCH1 of a RedCap UE, and its capability is temporarily restricted, and it is capable or has request to perform PUCCH repetition for Msg4 HARQ-ACK |
| 18 | CCCH of a eRedCap UE, and its capability is temporarily restricted, and it is capable or has request to perform PUCCH repetition for Msg4 HARQ-ACK |
| 19 | CCCH1 of a eRedCap UE, and its capability is temporarily restricted, and it is capable or has request to perform PUCCH repetition for Msg4 HARQ-ACK |
| 20 | CCCH of a non-(e)RedCap UE, and its capability is temporarily restricted and is capable or has request to perform PUCCH repetition for Msg4 HARQ-ACK. |
| 21 | CCCH1 of a non-(e)RedCap UE, and its capability is temporarily restricted and is capable or has request to perform PUCCH repetition for Msg4 HARQ-ACK. |
| 22...31 | Reserved |

In Table 3, the differentiation between CCCH class (e.g, CCCH and CCCH1) is also done by the LCID field instead of using a separate field in the MAC subheader.

In the above Table 2 and Table 3, the mapping between unique logical channel identity index/code points and combination of assisting information are only examples. Other mapping patterns are also possible as long as each unique index/code point is only mapped to one unique assisting information or one unique combination of assisting information. The present disclosure is not limited thereto. The length of the LCID field in the above example is only an example, and the lengths of other fields are also possible (e.g., 6 bits). The present disclosure is not limited thereto.

In some other embodiments, one or more of all fields in the above embodiments may be alternatively be placed in the payload of MAC SDU or be part of MAC CE contents. For example, in a MAC CE for early assisting information report, the MAC CE content is octet aligned, that is, a length of the MAC CE is an integer number of bytes, and a length of each byte is 8 bits. The MAC CE may includes fields indicating early assisting information and one or more R bits. For example, in a MAC CE for early assisting information report, the MAC CE content is octet aligned, and it can include an early assisting information field, an CCCH message type field and one or more R bits.

Some exemplary embodiments of the specific MAC subheader containing the early assisting information field are listed below. In the exemplary embodiments below, the early assisting information discussed is UE capability-related information, but other information may also be taken into consideration. A position for placing each field is also an example only, and may be switched. The length of each field and corresponding terms are also exemplary, and the present disclosure is not limited thereto.

In some embodiments, the MAC subheader is an MAC subheader that identifies the MAC CE configured to report the early assisting information.

In an embodiment, the MAC CE configured to report the early assisting information may only include the MAC subheader (the payload of the MAC CE is 0 bytes).

In another embodiment, the specific MAC subheader may include an R/LCID field, and the early assisting information field in the above embodiment is included in a payload (e.g., the MAC CE) of an MAC. In this embodiment, one LCID index may be used to indicate that this is the MAC CE for early assisting information report.

In some embodiments, the specific MAC subheader may be an MAC subheader that is configured to identify the MAC SDU including the CCCH message.

An embodiment of the present disclosure further provides an example of a specific MAC subheader including an early assisting information field calculated based on an equation. The positions and lengths of the fields provided in the inventive examples of the present disclosure may all be changed, and the present disclosure is not limited thereto.

In some embodiments, the MAC subPDU carrying the early assisting information may include at least one of the following fields.

A field, which is configured to indicate the specific MAC subheader including the early assisting information field. Exemplarily, the field is 1 bit. The field is set to 1 to indicate that the MAC subheader includes a field for early assisting information report, otherwise the field is set to zero. In some embodiments, the field can only be arranged in a first position on the left side, so as to distinguish it from a field configured to identify a subheader carrying indefinite-length MAC subPDUs.

A field, which is configured to indicate a specific MAC CE including the early assisting information field. Exemplarily, the field is 1 bit. The field is set to 1 to indicate that the MAC CE includes a field for early assisting information report, otherwise the field is set to zero. In some embodiments, the field can only be arranged in a first position on the left side, so as to distinguish it from a field configured to identify a subheader carrying indefinite-length MAC subPDUs.

A field, which is configured to indicate whether the message type of the CCCH message identified by the MAC subheader is the CCCH (the CCCH message with a size being 48 bits) or the CCCH1 (the CCCH message with a size being 64 bits). Exemplarily, a CCCH_ID field is set to 0 to indicate the CCCH, or set to 1 to indicate the CCCH1, or vice versa.

A field, which is configured to indicate the early assisting information, and is configured to indicate early assisting information reported to the base station by the UE. In some embodiments, a value of the field may be determined by the formula of the early assisting information field described in the present disclosure. In some other embodiments, the field may include one or more assisting information bits, and each assisting information bit is configured to indicate one piece of specific assisting information, for example, whether the UE has the capability to support a certain feature or indicating whether the UE requests a certain function. In some other embodiments, the field may be the LCID field, and the LCID field is particularly configured to identify different logical channels.

A reserved field. The field is 1 bit, with a value being 0. In some embodiments, a size of the MAC subPDU is always an integer multiple of 8 bits. In order to meet this rule, some bits that currently have no specific functional directions for the moment may be set as reserved bits. Therefore, the number of the reserved fields may range from 0 to multiple based on the lengths of the fields in different embodiments. For example, assuming that a 8-bit MAC subheader with a fixed length includes a 1-bit field configured to indicate the specific MAC subheader including the early assisting information field and includes a 6-bit early assisting information field, and in order to make up 8 bits, the remaining one bit may be set as the reserved bit.

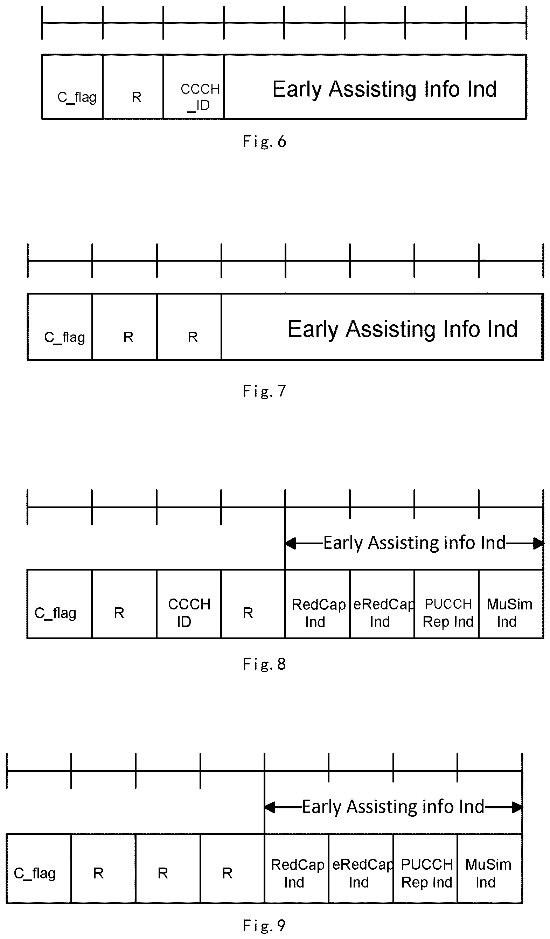

Fig. 6 is a schematic structural diagram (I) of a specific MAC subheader according to embodiments of the present disclosure. As shown in Fig. 6, the specific MAC subheader is an octet, that is, 8 bits, and the specific MAC subheader includes the following fields.

A C_flag field, a CCCH_ID field, an early assisting information field, and a reserved field (R).

C_flag field: the field is configured to indicate that the MAC subheader containing fields for early assisting information report. Exemplarily, The field has one bit, and it is set to 1 to indicate that the MAC subheader contains fields for early assisting information report, otherwise it is set to zero. In some embodiments, the field can only be arranged in a first position on the left side, so as to distinguish it from a field configured to identify a subheader carrying indefinite-length MAC subPDUs.

CCCH_ID field: the field is configured to to indicate whether the CCCH identified by the subheader is CCCH (i.e.. CCCH message of size 48 bits ) or CCCH1 (e.g., CCCH message of size 64 bits). In one example the CCCH ID is set to zero to indicate CCCH while is set to 1 to indicate CCCH1. In another example, the field is set to zero to indicate CCCH1 while set to 1 to indicate CCCH, or vice versa.

Early assisting information field: the field is configured to indicate the early assisting information reported to the base station by the UE. Exemplarily, the field has a length of 5 bits. The information include at least information relevant to UE capability. UE set the value of the early assisting information indication based on the common equation for early assisting information field with n sub_fields as discussed in the application. An example assuming three capability relevant fields is given as below:
Field 1: Device type, which is selected among value {0,1,2}, where each value represent one of device types of {eRedCap UE, RedCap UE and UE that is non-RedCap or non-eRedCap}. An example could be: 0 = non-eRedCap and non-RedCap UE, 1=RedCap UE and 2=eRedCap UE, and UE sets the value of this field based on its device type.
Field 2: MuSIM indication, which is an indication to indicate the whether a MuSIM UE's capability is temporarily restricted or not. This indication can have value of 1 or 0. In one example, UE sets this indication to 1 to indicate that the MuSIM UE's capability is temporarily restricted, and set to zero to indicate the MUSIM UE's capability is not temporarily restricted. Or vice versa.
Field 3: Msg4ACKRepetition indication, which is to indicate the UE is capable or has request to perform PUCCH repetition for Msg4 HARQ-ACK or not. This indication can have value of 1 or 0. In one example UE sets this field to the value zero to indicate that UE doesn't support or does not request to perform PUCCH repetition for Msg4 HARQ-ACK while UE set this field to value 1 to indicate that UE is capable or has requested to perform PUCCH repetition for Msg4 HARQ-ACK. Or vice versa. The present disclosure is not limited thereto.

In this embodiment, based on above three fields, an example equation for calculating the value of the early assisting information field is given as below: Early assisting information field = device type + MuSIM indication * 3 + Msg4ACKRepetition indication * 3 * 2.

The UE sets each field according to the field description given above. It is to be noted that the order of above fields can be switched, as long as the final equation follows the common equation for early assisting information field with n sub_fields as discussed above.

In another exemplary embodiment, the field may have other lengths, such as 6 bits, and the present disclosure is not limited thereto, as long as a final value obtained based on the values of the sub-fields according to the formula for calculating the value of the early assisting information field in the solution of the present disclosure is guaranteed not to exceed a maximum value that can be indicated by the field, such as (2^ (the number of lengths of this field in bits)). It is to be noted that, when the field is 6 bits, the reserved bit in Fig. 5 is no longer present to ensure that the length of the MAC subheader is one byte (i.e., the subheader includes the C_flag, CCCH_ID, and early assisting information fields).

The reserved field (R), with a value being 0.

Fig. 7 is a schematic structural diagram (II) of a specific MAC subheader according to embodiments of the present disclosure. As shown in Fig. 7, the specific MAC subheader is an octet, that is, 8 bits, and the specific MAC subheader includes the following fields.

A C_flag field, an early assisting information field, and a reserved field (R).

A difference between this embodiment and the above embodiment is that a field in the MAC subheader does not carry a field (e.g., CCCH_ID) indicating a CCCH type. In this embodiment, the CCCH_ID for indicating the type of the CCCH message may be regarded as a sub-field used for calculating the value of early assisting information field, and the rest is the same as the above embodiments.

In this embodiment, the early assisting information field may include the following several sub-fields.

Field 1: CCCH message type (CCCH_Type): which is selected among value {0, 1}, where each value presents one of CCCH type {CCCH, CCCH1}. One example is that value zero indicates CCCH : CCCH message of size 48 bits, while value 1 indicates CCCH1: CCCH of size 64 bits. Or vice versa, the present disclosure is not limited thereto.

Field 2: device type, which is selected among value {0,1,2}, where each value represent one of device types of {eRedCap UE,RedCap UE and UE that is non-RedCap or non-eRedCap}. An example could be: 0 = non-eRedCap and non-RedCap UE, 1=RedCap UE and 2=eRedCap UE, and UE sets the value of this field based on its device type.

Field 3: MuSIM indication, which is an indication to indicate the whether a MuSIM UE's capability is temporarily restricted or not. This indication can have value of 1 or 0. In one example, UE sets this indication to 1 to indicate that the MuSIM UE's capability is temporarily restricted, and set to zero to indicate the MUSIM UE's capability is not temporarily restricted. Or vice versa, the present disclosure is not limited thereto.

Field 4: Msg4ACKRepetition indication, which is to indicate the UE is capable or has request to perform PUCCH repetition for Msg4 HARQ-ACK or not. This indication can have value of 1 or 0. In one example UE sets this field to the value zero to indicate that UE doesn't support or does not request to perform PUCCH repetition for Msg4 HARQ-ACK while UE set this field to value 1 to indicate that UE is capable or has requested to perform PUCCH repetition for Msg4 HARQ-ACK. Or vice versa, the present disclosure is not limited thereto.

In this embodiment, the value of the early assisting information field including the above several sub-fields may be calculated based on a formula below. Early assisting information field = CCCH_Type +Device type*2 + MuSIM indication * 2 * 3 +Msg4ACKRepetition indication * 2 * 3 * 2.

In the embodiments of the present disclosure, the value of the early assisting information field may be obtained according to addition of an assisting information field in the specific MAC subheader, based on the value of each sub-field, and through calculation using the formula. After an NW side successfully receives information reported by the UE, the value of each sub-field may be reversely calculated based on the value of the early assisting information field, so as to calculate early assisting information reported by the UE, thereby achieving the purpose of indicating the early assisting information through the MAC subheader. Therefore, the problem of limited number of coding points of an LCID and poor flexibility with respect to the indication of assisting information during a RACH procedure by using the LCID in the related art is solved.

In another exemplary embodiment, the early assisting information field may also have other lengths, such as 6 bits, and the present disclosure is not limited thereto. It is to be noted that, when the field is 6 bits, only one reserved bit in Fig. 7 above is required to ensure that the length of the MAC subheader is one byte (i.e., the subheader includes the C_flag, the reserved bit, and the early assisting information field).

Another embodiment of the present disclosure further provides a specific MAC subheader including an early assisting information field. In the early assisting information field, each feature may be indicated individually.

Fig. 8 is a schematic structural diagram (III) of a specific MAC subheader according to embodiments of the present disclosure. As shown in Fig. 8, the specific MAC subheader is an octet, that is, 8 bits, and the specific MAC subheader includes the following fields: a C_flag field, a CCCH_ID field, an early assisting information field, and a reserved field (R).

C_flag field: In one example the field is to indicate that the MAC subheader containing fields for early assisting information report. The field has one bit, and it is set to 1 to indicate that the MAC subheader contains fields for early assisting information report, otherwise it is set to zero.

CCCH_ID field: The field is to indicate whether the CCCH identified by the subheader is CCCH (i.e.. CCCH message of size 48 bits ) or CCCH1 (e.g., CCCH message of size 64 bits). In one example the CCCH ID is set to zero to indicate CCCH while is set to 1 to indicate CCCH1. In another example, the field is set to zero to indicate CCCH1 while set to 1 to indicate CCCH. or vice versa.

The reserved field (R): a value being 0.

Early assisting information field: The field is of 4 bits, where each bit indicates UE capability to support a feature as discussed below.

Indication information to indicate that UE is capable or has request to perform PUCCH repetition for Msg4 HARQ-ACK or not. In one example the value zero indicates that UE does not support or does not request to perform PUCCH repetition for Msg4 HARQ-ACK while value 1 indicates that UE is capable or has requested to perform PUCCH repetition for Msg4 HARQ-ACK. Or vice versa.

An RedCap indication to indicate that UE is a UE with reduced capability (e.g., RedCap UE) or not. In one example the value zero indicates that UE is not a RedCap UE while value 1 indicates UE is a RedCap UE. Or vice versa.

An eRedCap indication to indicate that UE is a UE with enhanced reduced capability (e.g., eRedCap UE) or not. In one example the value zero indicates that UE is not an eRedCap UE while value 1 indicates UE is an eRedCap UE. Or vice versa.

An MuSIM indication to indicate that UE's capability is temporarily restricted or not. In one example the value zero indicates that UE capability is not restricted while value 1 indicates UE capability is temporarily restricted. Or vice versa. Or in another example the value zero indicates that UE capability temporary restriction is removed while value 1 indicates UE capability is temporarily restricted. Or vice versa.. The present disclosure is not limited thereto.

In the embodiments of the present disclosure, each UE capability feature may be indicated individually in the specific MAC subheader, such that the early assisting information is indicated through the MAC subheader, thereby solving the problem of limited number of coding points of an LCID and poor flexibility with respect to the indication of assisting information during a RACH procedure by using the LCID in the related art.

Fig. 9 is a schematic structural diagram (IV) of a specific MAC subheader according to embodiments of the present disclosure. As shown in Fig. 9, the specific MAC subheader is an octet, that is, 8 bits, and the specific MAC subheader includes the following fields: a C_flag field, an early assisting information field, and a reserved field.

Compared with the above embodiment, in this embodiment, a CCCH_ID for indicating a CCCH message type is not present in the MAC subheader, and the rest is the same as the above embodiments.

Another embodiment of the present disclosure further provides a specific MAC subheader including an early assisting information field. The early assisting information field indicates an LCID field. The LCID field is particularly configured to identify different logical channels for the CCCH message. Exemplarily, the field may be represented by using an LCID_CCCH. In another exemplary embodiment, the field may also be represented with other names, and the present disclosure is not limited thereto.

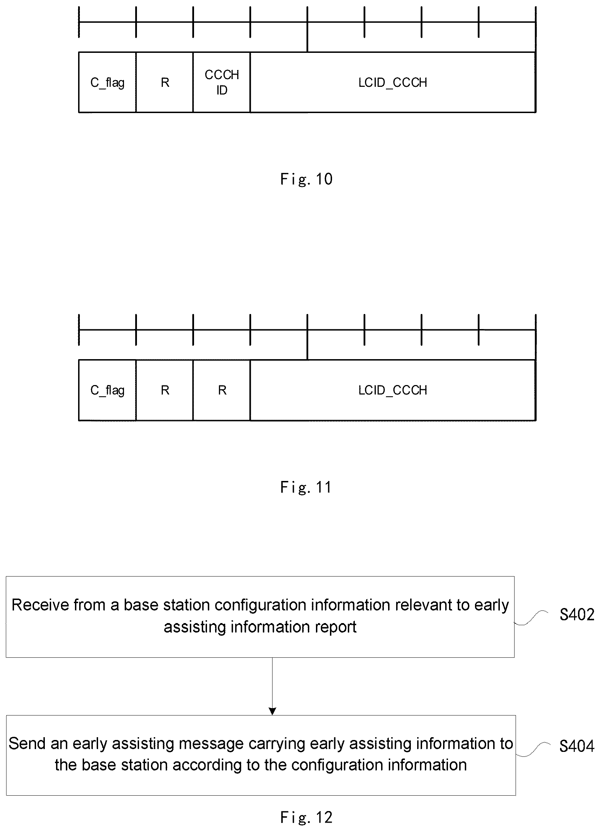

Fig. 10 is a schematic structural diagram (V) of a specific MAC subheader according to embodiments of the present disclosure. As shown in Fig. 10, the specific MAC subheader is an octet, that is, 8 bits, and the specific MAC subheader includes the following fields: a C_flag field, a reserved field (R), a CCCH_ID field, and an LCID_CCCH field.

In this embodiment, the LCID_CCCH field is actually configured to indicate early assisting information, and thus may also be referred to as an early assisting information field, or other names, and the present disclosure is not limited thereto.

C_flag field: the field is configured to indicate the specific MAC subheader including the early assisting information field. Exemplarily, the field is 1 bit. The field is set to 1 to indicate that the MAC subheader includes a field for early assisting information report, otherwise the field is set to zero.

The reserved field (R): a value being 0.

CCCH_ID field: the field is configured to indicate whether the message type of the CCCH message identified by the MAC subheader is the CCCH (the CCCH message with a size being 48 bits) or the CCCH1 (the CCCH message with a size being 64 bits). Exemplarily, a CCCH_ID field is set to 0 to indicate the CCCH, or set to 1 to indicate the CCCH1, or vice versa.

LCID_CCCH field: being configured to indicate a unique LCID defined according to the content of the CCCH message. Exemplarily, each index value of the LCID may uniquely indicate any one or a combination of a plurality of pieces of early assisting information (e.g, UE capability information). A mapping relationship between an exemplary index value and the early assisting information may be shown in Table 2 in the above embodiment. In another exemplary embodiment, the field may also have other lengths, such as 6 bits, and the present disclosure is not limited thereto, It is to be noted that, when the field is 6 bits, the reserved bit in Fig. 10 above is no longer present to ensure that the length of the MAC subheader is one byte (i.e., the MAC subheader includes the C_flag, CCCH_ID, and LCID_CCCH fields).

Fig. 11 is a schematic structural diagram (VI) of a specific MAC subheader according to embodiments of the present disclosure. As shown in Fig. 11, the specific MAC subheader is an octet, that is, 8 bits, and the specific MAC subheader includes the following fields: a C_flag field, a reserved field (R), and an LCID_CCCH field.

In this embodiment, the LCID_CCCH field is actually configured to indicate early assisting information, and thus may also be referred to as an early assisting information field, or other names, and the present disclosure is not limited thereto.

Compared with the above embodiment, in this embodiment, a CCCH_ID for indicating a CCCH message type is not present in the MAC subheader, and the rest is the same as the above embodiments.

C_flag field: the field is configured to indicate the specific MAC subheader including the early assisting information field. Exemplarily, the field is 1 bit. The field is set to 1 to indicate that the MAC subheader includes a field for early assisting information report, otherwise the field is set to zero.

The reserved field (R): a value being 0.

LCID_CCCH field is to indicate the unique logical channel identify defined for content included in CCCH message. Exemplarily, each index value of the LCID may uniquely indicate any one or a combination of a plurality of pieces of early assisting information (e.g, UE capability information). A mapping relationship between an exemplary index value and the early assisting information may be shown in Table 3 in the above embodiment. In another exemplary embodiment, the field may also have other lengths, such as 6 bits, and the present disclosure is not limited thereto, It is to be noted that, when the field is 6 bits, there is only one reserved bit (R) in Fig. 11 to ensure that the length of the MAC subheader is one byte (i.e., the subheader includes the C_flag, R, and LCID_CCCH fields).

In the embodiments of the present disclosure, the LCID may be set in the specific MAC subheader, and the mapping relationship between the LCID and the early assisting information is set, such that the early assisting information is indicated through the MAC subheader, thereby solving the problem of limited number of coding points of an LCID and poor flexibility with respect to the indication of assisting information during a RACH procedure by using the LCID in the related art.

Another embodiment of the present disclosure further provides an early assisting message that is particularly configured to transmit early assisting information.

In some embodiments, the early assisting message may be a Radio Resource Control (RRC) message or an RRC message segment carrying the early assisting information.

In some embodiments, the early assisting message may also be an MAC CE or an MAC SDU, or an MAC SDU segment carrying the early assisting information.

Another embodiment of the present disclosure provides an early assisting information report method, which is applied to a terminal. Fig. 12 is a flowchart (III) of an early assisting information report method according to embodiments of the present disclosure. As shown in Fig. 12, the flow includes the following steps.

At S402, configuration information relevant to early assisting information report is received from a base station.

At S404, an early assisting message carrying early assisting information is sent to the base station according to the configuration information.

In this embodiment, the configuration information relevant to early assisting information report in S402 is configured to cause the UE to know that an NW can decode the early assisting message, or the NW has requested or allowed the UE to report the early assisting information through the early assisting message during a RACH procedure, and the NW needs to provide some related configuration information to the UE.

In some embodiments, the early assisting message may be an RRC message, an RRC message segment, an MAC CE or an MAC SDU, or an MAC SDU segment.

In the embodiments of the present disclosure, by introducing the early assisting message that is particularly configured to provide the early assisting information to the UE, the problem of limited number of coding points of an LCID and poor flexibility with respect to the indication of assisting information during a RACH procedure by using the LCID in the related art may be solved.

In some embodiments, the early assisting message is a specific RRC message carrying the early assisting information. Exemplarily, an RRC early assisting message (RRCEarlylnformation) may be configured for description. In some examples, other message names may also be configured for expression, and the present disclosure is not limited thereto.

In some embodiments, the early assisting information may include one or more pieces of UE capability-related information. The UE capability indicates whether the UE supports one feature or one function, and the specific content of the early assisting information is not limited in the present disclosure.

In some embodiments, the early assisting information may include any one piece of the following information or a combination of any information.

Indication information for indicating whether the UE supports or requests an automatic repeat request against a PUCCH of Msg4HARQ-ACK.

Indication information for indicating whether the UE is a UE with a Reduced Capability (RedCap) (e.g., RedCap UE).

Indication information for indicating whether the UE is a UE with an Enhanced Reduced Capability (e.g., eRedCap UE).

Indication information for indicating whether the UE is temporarily restricted.

MUSIM assisting information.

UE identity information.

Spare field.

Reserved field.

Key extension field.

In some embodiments, the configuration information in S402 includes: at least one of an explicit indication or an implicit indication that is configured to indicate whether the early assisting information can be reported during the RACH procedure.

In an exemplary embodiment, the explicit indication may include a clear instruction that is configured to indicate whether the UE is allowed to use the early assisting message. Exemplarily, the explicit indication is that the UE may use the RRC early assisting message (RRCEarlyInformation) to report the early assisting information.

In some embodiments, the implicit indication includes at least one of the following:
Automatic repeat request configuration information of Msg4 HARQ-ACK.
Temporary capability limitation related configuration information of a MUSIM terminal.
RedCap terminal configuration information.
eRedCap terminal configuration information.
Radio Network Temporary Identifier (RNTI) configuration information.
Search Space (SS) configuration information.
Control resource set (CORESET) configuration information.
RACH procedure trigger information (e.g., a triggering cause).
Initial access process trigger information (e.g., the triggering cause, and a purpose of initiating the process).

In an exemplary embodiment, the automatic repeat request configuration information may include at least one of the following:
An enable indication to indicate whether UE is allowed to send early indication of supporting or requesting PUCCH repetition for Msg4 HARQ-ACK. In one example, sending the early indication may be limited to during RACH procedure..

A repetition factor configuration of PUCCH repetition for Msg4 HARQ-ACK. One example candidate values of the configuration could be {1, 2,4,8}.

In an exemplary embodiment, MUSIM temporary capability restriction information may be applied for all RRC states while in some examples the indication can be limited to certain RRC procedure, e.g., in RRC connection setup or RRC connection resume procedure.

In an exemplary embodiment, the RedCap is a bandwidth reduction technique, and the RedCap terminal configuration information may include at least one of the following.

A RedCapUE indication, which is configured to indicate whether a RedCap UE can indicate it is a RedCap UE using the RRC Message specifically designed to provide early assisting information during RACH procedure.

A cell barred indication, which is configured to indicate whether the cell is barred for RedCap UE with 1 or 2 Rx bands, or to indicate whether the cell is barred for accessing the RedCapUE with 1 or 2 Rx bands.

A half-duplex indication, which is configured to indicate whether a current cell supports half-duplex Frequency Division Duplex/Duplexing (FDD) RedCapUE.

In an exemplary embodiment, the eRedCap is an enhanced bandwidth reduction technique, and the eRedCap terminal configuration information may include at least one of the following.

An eRedCapUE indication, which is to indicate whether a eRedCap UE can indicate it is a eRedCap UE during RACH procedure.

A cell barred indication, which to indicate whether the cell is barred for eRedCap UE with 1 or 2 Rx bands, or to indicate whether the cell is barred for accessing the eRedCapUE with 1 or 2 Rx bands.

A half-duplex indication, which is to indicate whether current cell supports half-duplex FDD eRedCap UEs.

In an exemplary embodiment, the RNTI configuration for monitoring the DCI scheduling RRC message for early assisting information. In some example it can contain at least one of below:.

An RNTI offset value for TC-RNTI. When configured, and UE has sent Msg3 or MsgA indicating request for sending early assisting information. UE then uses the modified TC-RNTI to monitor DCI scheduling RRC message for early assisting information. The modified TC-RNTI is generated based on the RNTI offset value for TC-RNTI and the TC-RNTI value received in the random access response scheduling the Msg3. In one example, the modified TC-RNTI equals to TC-RNTI+ RNTI offset for TC-RNTI.

An b) RNTI offset value for MsgB-RNTI. When configured, and UE has sent MsgA indicating request for sending early assisting information. UE then uses modified MsgB-RNTI to monitor DCI scheduling RRC message for early assisting information. The modified MsgB-RNTI is generated based on the RNTI offset value and the MsgB-RNTI generated based on the RACH resource selected for transmission of MsgA as specified in standards 38.321. In some example the modified MsgB-RNTI equals to MsgB-RNTI+ RNTI offset for Msg-RNTI.

In an exemplary embodiment, the Search space configuration to search downlink control information (DCI) scheduling RRC message for early assisting information. The Search space configuration contains at least time and frequency domain resource configuration. In some example at least one of time or frequency or code domain resource of ( the Search space configured to search downlink control information (DCI) scheduling RRC message for early assisting information) can be different from the common search space configured for UE to monitor DCI scheduling RRC message not for early assisting information..

In an exemplary embodiment, the Control resource set (CORESET) configuration to search downlink control information (DCI) scheduling RRC message for early assisting information. The CORESET configuration contains at least time and frequency domain resource configuration. In some example at least one of time or frequency or code domain resource of ( the CORESET configured to search downlink control information (DCI) scheduling RRC message for early assisting information) can be different from the common CORESET configured for UE to monitor DCI scheduling RRC message not for early assisting information.

In the embodiments of the present disclosure, through the implicit indication in any one of the above embodiments, the terminal may be implicitly notified that the cell allows the UE to use the early assisting message that is particularly configured to provide the early assisting information to the NW, and report the early assisting information during the RACH procedure or at the end of RACH.

In some embodiments, the configuration information in S402 may be transmitted in any one of the following: SI, a broadcast message, a multicast message, RRC signalling, a NAS message, a page, a short message, MAC signalling, and physical layer signalling.

In an exemplary embodiment, when the configuration information is transmitted by using the SI, it may be transmitted via an SIB1 message and/or a system message composed of one or more SIBx lEs, where x in the SIBx IE is a positive integer from 2. The SIBx IE may be one or more existing SIBs (e.g., SIB2-SIB21) or a new SIB (e.g., SIB22) introduced.

In an exemplary embodiment, one common SIBx may be configured to indicate one or more indicates in the above embodiments, and the x in the SIBx may be any positive integer, such as SIB1 or SIB22.

In another embodiment, a plurality of pieces of different SI (one or more among the SIB1 messages or SIBxIEs) may be used to indicate the configuration information in any one of the above embodiments. Exemplarily, the SIB1 may include the configuration information for the RedCapUE, the configuration information for the eRedCapUE, the configuration information for the MUSIM terminal, or the explicit indication, such that the terminal can use the specific MAC subheader carrying the early assisting information field. Exemplarily, the SIB19 may include the automatic repeat request configuration information of the Msg4 HARQ-ACK.

In some embodiments, the RRC early assisting message may provide the early assisting information to the NW from the UE during the RACH procedure. The RRC early assisting message may be sent during the RACH procedure, exemplarily, including at least one of RRC establishment, RRC Resume, RRC reestablishment, RRC reconfiguration process, or the RACH procedure triggered by any one of other use situations. Alternatively, the RRC early assisting message may also be transmitted based on NW scheduling after the RACH procedure is completed. Description is performed by using the fact that the RRC early assisting message provides the early assisting information to the NW from the UE during the RACH procedure as an example.

In some embodiments, in the 4-step RACH procedure, the RRC early assisting message may be sent after the Msg3 is transmitted and before the Msg4 is transmitted, or in the 2-step RACH procedure, the RRC early assisting message may be sent after the MsgA is transmitted and before the MsgB is transmitted. Exemplarily, in order to distinguish the RRC early assisting message and existing Msg3 specified in the standard, Msg3bis or subsequent Msg3 may be used to describe a message including the RRC early assisting message. The above terms such as the RRCEarlylnformation, the Msg3bis, and the subsequent Msg3 are intended to simplify the description, and the present disclosure is not limited thereto.

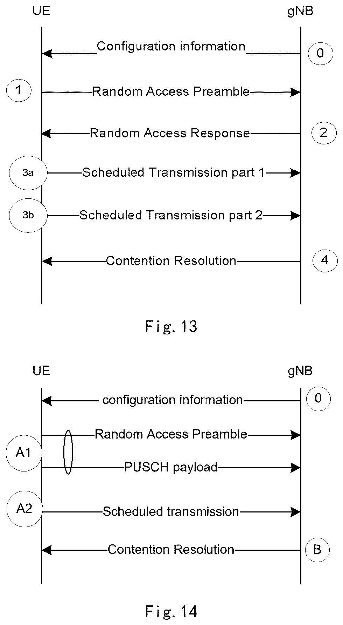

Fig. 13 is a flowchart of a 4-step RACH according to embodiments of the present disclosure. As shown in Fig. 13, the flow includes the following steps.

At S0, a UE receives, from a base station, configuration information relevant to early assisting information report.

At S1, the UE transmits a random access preamble (e.g., Msg1) to the base station.

At S2, the UE receives a random access response (e.g., Msg2) from the base station.

At S3a, the UE transmits a first port of an uplink message (e.g., Msg3) based on NW scheduling.

At S3b, after transmission of the first port (e.g., Msg3) of the uplink message, the UE monitors the DCI for scheduling the early assisting information, and transmits the scheduled transmission part 2 based on the scheduling of the base station, that is, sending the early assisting information (e.g., Msg3bis) to the base station based on scheduling information received in the DCI.

At S4, the UE receives, from the base station, Msg4 for contention resolution.

In some embodiments, the uplink message in S3a may include an indication for indicating the presence of the second port for scheduled transmission. The uplink message may further include Buffer size information of data to be transmitted.

In some embodiments, before S1, UE may select the RACH occasion or RACH partition based on the buffer size or the size of potential CCCH size.

Fig. 14 is a flowchart of a 2-step RACH according to embodiments of the present disclosure. As shown in Fig. 14, the flow includes the following steps.

At S0, a UE receives, from a base station, configuration information relevant to early assisting information report.

At SA1, the UE transmits, to the base station, a random access preamble and a PUSCH load (MsgA).

At SA2, after transmission of the PUSCH load, the UE monitors DCI for scheduling early assisting information, and sends the early assisting information (e.g., MsgAbis) to an NW based on scheduling information received in the DCI.

At SB, the UE receives, from the base station, MsgB for contention resolution.

In some embodiments, in SA1, one indication may be included in the uplink message (PUSCH payload) that there is MsgAbis pending for transmission on UE side. Buffer size information for the pending data may also be included.

In some embodiments, before S1, the UE may select the RACH occasion or RACH partition based on the buffer size or the size of potential CCCH size.

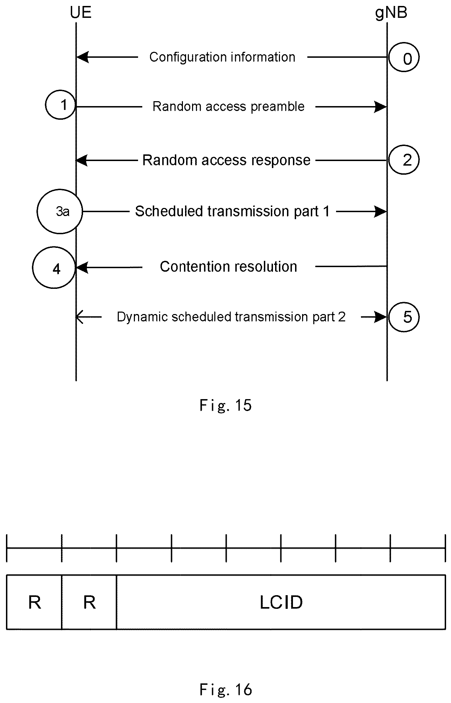

Fig. 15 is a flowchart of a 4-step RACH according to another embodiment of the present disclosure. As shown in Fig. 15, the flow includes the following steps.

At S0, a UE receives, from a base station, configuration information relevant to early assisting information report.

At S1, the UE transmits a random access preamble (e.g.,Msg1) to the base station.

At S2, the UE receives a random access response (e.g.,Msg2) from the base station.

At S3a, the UE transmits, to the base station, a first port CCCH message (e.g. CCCH message part 1 or CCCH message 1) as an uplink message (e.g., Msg3) based on NW scheduling.

At S4, the UE receives, from the base station, Msg4 for contention resolution.

At S5, the UE monitors dynamic scheduling from the base station, and performs transmission of a second port CCCH message (e.g., CCCH message part 2 or CCCH message 2) according to received scheduling information.

In this embodiment, an RRC may divide the CCCH message into the first port of the CCCH message and the second port of the CCCH message, or the RRC may generate two CCCH messages, which are the first CCCH message and the second CCCH message. Compared with a traditional CCCH message, in this embodiment, partial information may be transferred into the second port of the CCCH message or the second CCCH message, so as to reduce the size of the single CCCH message.

In some embodiments, the configuration information to be sent in S0 may further includes a RACH configuration. The RACH configuration may be sent together with or separately from the configuration information for early assisting information report.

In some embodiments, after waiting for the receiving of the first port and second port of the CCCH message (or the first CCCH message and the second CCCH message), the base station starts to merge the received CCCH messages.

Through the embodiments of the present disclosure, transmission scheduling during the RACH procedure is sent by being divided into two portions, such that the size of the single CCCH message may be reduced, and the early assisting information is reported without increasing the size of the CCCH message, such that the problem of limited number of coding points of an LCID and poor flexibility with respect to the indication of assisting information during a RACH procedure by using the LCID in the related art is solved.

In an exemplary embodiment of the present disclosure, the base station may send the configuration information to the terminal through an SIB1.

In this embodiment, a structure of the SIB1 is shown as follows.

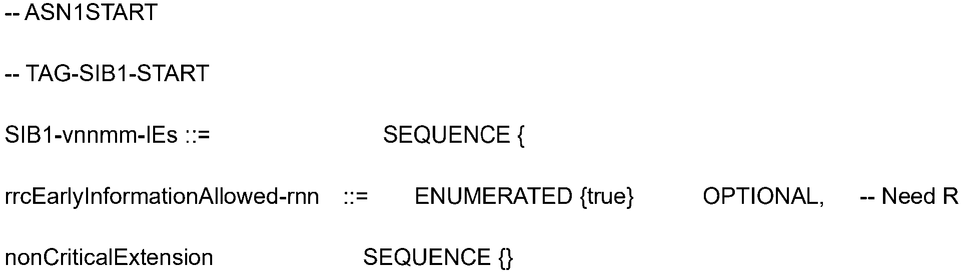

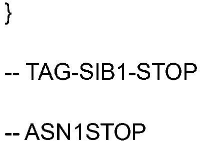

In this embodiment, SIB1-vnnmm refers to the SIB1 defined in a standard. v represents an executed standard version; nn represents a version number of a published standard; and mm represents a mm-th revision of nn-th version, that is, mm-th sub-version of a nn version. Exemplarily, SIB1-v1800 refers to the SIB1 based on 00th revised standard of the 18th edition.

In this embodiment, a new CE rrcEarlylnformationAllowed-rnn (allowing the UE to provide the early assisting information to the NW during the RACH) is configured to introduce a new field in a future standard version. Exemplarily, a specific RRC message RRCEarlyInformation (RRC early assisting message) carrying the early assisting information is allowed to be an IE in the SIB1 message.

In this embodiment, the presence of a rrcEarlyInformationAllowed field may be used to indicate that the UE is allowed to provide the early assisting information to the NW during the RACH procedure.

For above examples, rrcEarlylnformationAllowed is only an example numerology, other numerology is also possible. For example, the field can be commonCapabilityallowed, assistanceInformationDuringRACHAllowed, rrcEarlyAssistingInformationAllowed, rrcEarlylnformationAllowed, or rrcEarlylndicationAllowed and etc. Field names of the configuration information are not limited in the present disclosure.

In this example, the RRC message to provide early assisting information during RACH procedure is sent from UE to NW using logical channel CCCH2. Therefore the enable indication to enable the RRC message for early assisting information from UE to NW during RACH can be equivalent to enable to support of logical CCCH2.

In this embodiment, a structure of the SIB1 is shown as follows.

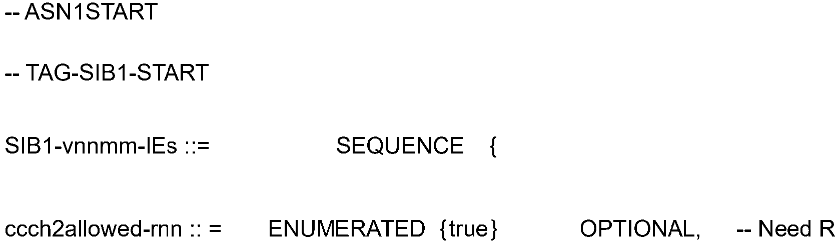

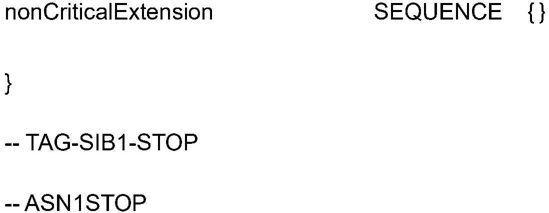

In this embodiment, the presence of the ccch2allowed field may be used to indicate that the cell supports UE to report early assisting information to NW (e.g, to indicate UE capabilities) during RACH procedure via CCCH2.

In another example, instead of enumerated true type indication, the IEs as discussed in above two examples can be a boolean type indication. For example, value 1 indicates the cell supports UE to use the new RRC message (e.g., RRCEarlylnformation) during RACH procedure to provide assisting information to NW, while value zero indicates the cell does not support UE to use the new RRC message (e.g., RRCEarlylnformation) during RACH procedure to provide assisting information to NW. Or vice versa., the present disclosure is not limited thereto.

In the above two embodiments, the ccch2allowed and the rrcEarlylnformationAllowed-rnn both belong to an explicit indication in the configuration information. In addition, the configuration information may also be an implicit indication to implicitly informed the cell supports to use New RRC Message to deliver assisting information to NW.

In an exemplary embodiment, it may be specified that the explicit indication is only needed for RedCap UE, while implicit indication is used for other use case.

In some embodiments, a structure of the SIB1 is shown as follows.

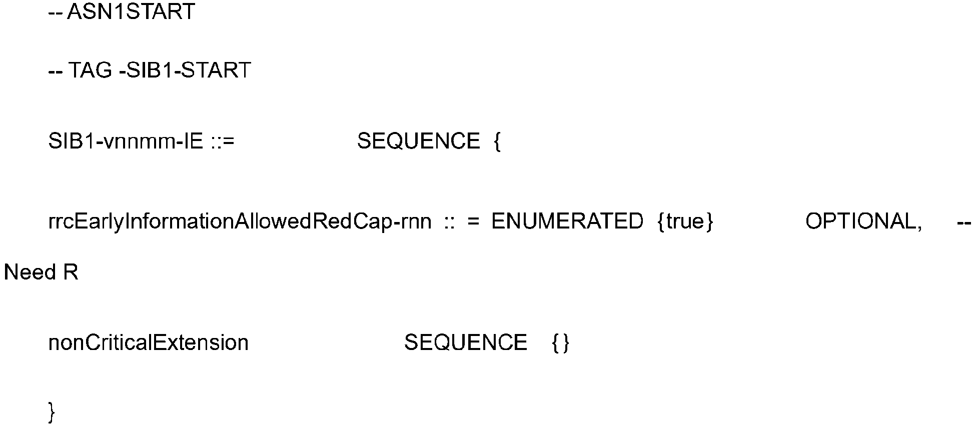

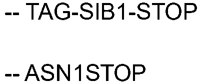

In this embodiment, the presence of the rrcEarlylnformationAllowedRedCap-rnn field may be indicates that the cell supports RedCap UE to use the new RRC message (e.g.,RRCEarlylnformation message) during RACH procedure to provide assisting information to NW.

In this embodiment, if a redcap UE does not support the RRC Message introduced to provide early assisting information during RACH, the redcap UE will not make use of the RRC message for early assisting information. If a redcap UE support the RRC Message, and the redcap UE needs to indicate assisting information (e.g., its capability to support other features) during RACH procedure, the redcap UE can transmit the assisting information to NW by RRC message for early assisting information.

In some examples, when the explicit indication is provided via system information, change of this configuration will lead to value tag changes, which results SI updates procedure.

In an exemplary embodiment of the present disclosure, the base station may also send the configuration information to the terminal through a new SIBx.

In this embodiment, SIBx contains information relevant to evaluate if a UE is allowed to provide early assisting information to NW (e.g, to indicate UE capabilities) during RACH procedure, e.g., by transmitting the RRC message specific to provide early assisting information (e.g., RRCEarlylnformation message) . In this embodiment, x is n integer number starting from 22, nn is the version of release this new SIB is introduced in standards.

In some embodiments, the design of an IE of the SIBx is shown as follows.

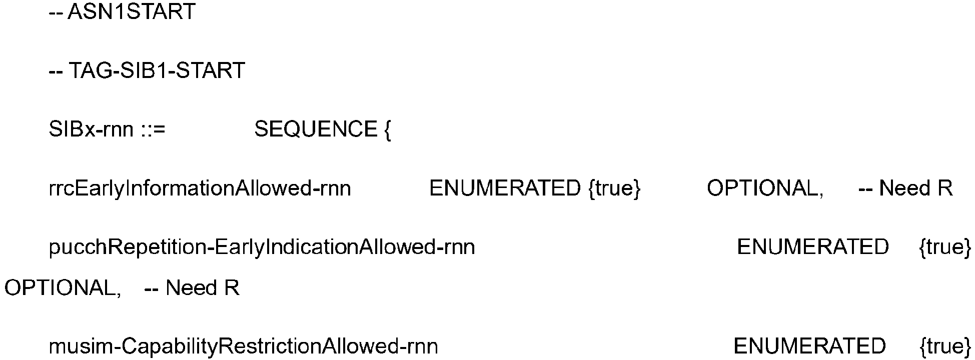

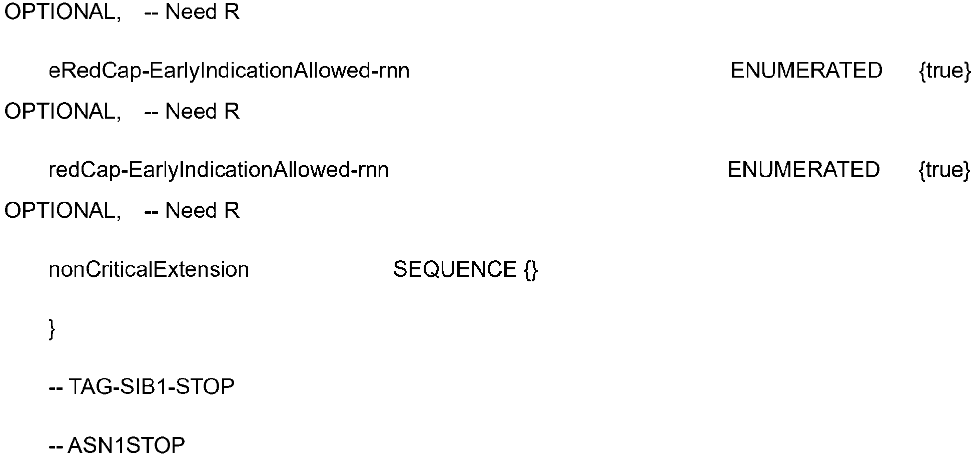

In this embodiment, SIBx field descriptions is shown in Table 4 below.

**Table 4:**

| SIBx field | Field descriptions |
|---|---|
| rrcEarlyInformationAllowed | The presence of this field indicates that if UE is allowed to provide early assisting information to NW (e.g, to indicate UE capabilities) via RRCEarlylnformation message. |
| pucchReparin-EarlyIndicationAllowed-rnn | The presence of this field indicates that if UE is allowed to sends indication of PUCCH repetition for Msg4 HARQ-ACK capability or PUCCH repetition for Msg4 HARQ-ACK during RACH procedure. e.g., by transmission of RRCEarlylnformation message. |
| musim-CapabilityRestrictionAllowed | The presence of this field indicates that UE is allowed to sends indication of MUSIM temporary capability restriction during RRC setup and RRC resume procedure, by transmission of RRCEarlylnformation message. |
| eRedCap-EarlylndicationAllowed-rnn | The presence of this field indicates that the cell supports eRedCap UE to sends indication of eRedCap capability during RACH procedure, e.g., by including assisting information in RRCEarlylnformation message. |
| RedCap-EarlyIndicationAllowed-rnn | The presence of this field indicates if RedCap UE is allowed to sends indication of RedCap capability during RACH procedure, e.g., by including assisting information in RRCEarlylnformation message. |

In this embodiment, nonCritical Extension in above field is used to introduce new fields in future version of standards. In another example it can be replaced by other marks, and the present disclosure is not limited thereto.

In another example, separate system information (one or more of SIB1 message or SIBx information elements) can be used to indicate configurations discussed above, e.g,. SIB1 can includes configuration for RedCap UEs or configuration for eRedCap UEs or configuration for MUSIM, SIB19 can include the configuration for PUCCH repetition for Msg4 HARQ-ACK, SIB22 includes explicit indication to enable RRC message for early assisting information from UE to NW.

In the embodiments of the present disclosure, after receiving the configuration information, the UE needs to inform the base station that it wants to indicate the early assisting information in the RRC message (alternatively a MAC SDU or a MAC SDU segment). The process may be implemented in step 3a in the above 4-step RACH or step A1 in the 2-step RACH. After the base station receives such request/information from UE, the base station can schedule uplink resource accordingly so that UE can transmits the correspondent RRC message (e.g., RRCEarlyInformation message).

In the embodiments of the present disclosure, the UE wants to transmit the early assisting information (e.g., RRCEarlylnformation message), to achieve this purpose, at least one of below method can be considered:.

Alternative one: reserved LCID code points can be used to identify the CCCH/CCCH1 message that will be followed by a RRC message indicating early assisting information from UE to NW.

Alternative two: R bit in the MAC subheader identifying C-RNTI can be used to indicate whether UE has request to send RRC message for early assisting information.

In an exemplary embodiment, Table Values in the above Alternative one are shown in Table 5.

**Table 5:**

| Coding point/index | LCID values |
|---|---|
| m1 | CCCH of size 48 bits, which may be followed by a RRC message indicating early information to be transmitted on a UE side, in other words, the UE has requirements for an early assisting message that is about to be sent to an NW |
| m2 | CCCH of size 64 bits, which may be followed by a RRC message indicating early information to be transmitted on a UE side, in other words, the UE has requirements for an early assisting message that is about to be sent to an NW |

In this embodiment, value m1 and m2 in Table 5 are any two reserved values in the LCID table, and are any integer selected from {47 or 37-42}, m1 and m2 is different.

In this embodiment, if the UE wants to send early assisting information in RRC message, it will set the LCID field identifying the CCCH messages included in Msg3 or MsgA to the values in {47 or 37-42}. When the base station receives the Msg3/MsgA containing the LCID, the base station knows that the UE has requested a resource to transmit RRC message containing early assisting information.

Fig. 16 is a schematic structural diagram of an MAC subheader of an MAC CE for identifying C-RNTI according to embodiments of the present disclosure. As shown in Fig. 16, the MAC subheader has two R bits.

In this embodiment, the UE wants to send the early assisting information to an NW side is indicated by one or two R bits reserved in the MAC subheader of the MAC CE for identifying the C-RNTI, that is, the above Alternative II.

In an exemplary embodiment, the first R bit can be set to 1 to indicates that UE wants to send early assisting information in RRC message (e.g., RRCEarlylnformation message) to the NW side.

In another exemplary embodiment, the second R bit may be set to 1 to indicate that the UE wants to send early assisting information in RRC message (e.g., RRCEarlylnformation message) to the NW side.

In an exemplary embodiment, the above Alternative I and Alternative II may be used in combination. Exemplarily, Alternative I is used when Msg3 or MsgA contains CCCH messages while Alternative II is used when Msg3 or MsgA contains C-RNTI MAC CE.

In the embodiments of the present disclosure, after sending the above indication to the base station, the UE provides the early assisting information in the RRC message (or the RRC message segment, MAC SDU, or MAC SDU segment). The process may be implemented in step 3b in the above 4-step RACH or step A2 in the 2-step RACH. Exemplarily, if it is based on the RRC message or the RRC message segment, the UE may be implemented by sending the RRC early assisting message to the NW. Description will be performed below with reference to the content of the early assisting information.

As shown below, the content of the early assisting information may include at least information relevant to the UE capability or UE type.

In some embodiments, An indication to indicate that UE is capable or has request to perform PUCCH repetition for Msg4 HARQ-ACK or not. This information may be presented as given below:
A one bit indication with Boolean type may be used. In one example the value zero indicates that UE doesn't support or does not request to perform PUCCH repetition for Msg4 HARQ-ACK while value 1 indicates that UE is capable or has requested to perform PUCCH repetition for Msg4 HARQ-ACK. Or vice versa, the present disclosure is not limited thereto. In some example this indication is optionally presented when PUCCH repetition for Msg4 HARQ-ACK configuration (e.g., repetition number) is configured by NW, e.g., in system information.

The information can be delivered by presence of indication. In this example, presence of the indication field indicates that UE is capable or has request to perform PUCCH repetition for Msg4 HARQ-ACK, while absence of this indication indicates that UE does not support or does not request to perform PUCCH repetition for Msg4 HARQ-ACK.

In some embodiments, the indication information for indicating whether the UE is the UE with reduced capability (e.g., RedCap UE) or not, this information may be presented as given below.

A one bit indication with Boolean type may be used. In one example the value zero indicates that UE is not a RedCap UE while value 1 indicates UE is a RedCap UE. Or vice versa, the present disclosure is not limited thereto.

Presence of indication is used to indicate whether UE is a RedCap UE or not. In one example, presence of the indication indicates that UE is a RedCap UE while absence of this indication indicates that indicates that UE is not a RedCap UE.

In some embodiments, An indication to indicate that UE is a UE with enhanced reduced capability (e.g., eRedCap UE) or not. This information may be presented as given below:
A one bit indication with Boolean type may be used. In one example the value zero indicates that UE is not an eRedCap UE while value 1 indicates UE is an eRedCap UE. Or vice versa, the present disclosure is not limited thereto.

Presence of indication is used to indicate whether UE is a RedCap UE or not. In one example, presence of the indication indicates that UE is an eRedCap UE while absence of this indication indicates that indicates that UE is not an eRedCap UE.

In some embodiments, An indication to indicate that UE capability is temporarily restricted or not. A typical use case is for UE supports Multi-SIM, when UE has activated more than one SIM cards, UE capability (e.g., supported band combination, capability to support dual connectivity) maybe temporarily restricted in such condition. This information may be presented as given below:
A one bit indication with Boolean type may be used. In one example the value zero indicates that UE capability is not restricted while value 1 indicates UE capability is temporarily restricted. Or vice versa. Or in another example the value zero indicates that UE capability temporary restriction is removed while value 1 indicates UE capability is temporarily restricted. Or vice versa, the present disclosure is not limited thereto.

Presence of indication is used to indicate whether UE capability is temporarily restricted or not. In one example, presence of the indication indicates that UE capability is temporarily restricted, while absence of this indication indicates that indicates that UE capability is not restricted or UE capability restriction is removed.

In some embodiments, Multiple SIM (MUSIM) assisting information includes at least one of the following: UE preference on the MUSIM gap(s) priority, UE preference on the maximum number of MIMO layers, UE supported band-combinations and the bandwidth, UE supported capability information when it's capability is temporarily restricted.

In some embodiments, The UE supported capability information when UE capability is temporarily restricted includes at least one of supported band-combinations and the bandwidth, supported on the maximum number of MIMO layers, supported MUSIM gap(s) or supported MUSIM gap(s) priority.

In some embodiments, UE identify information. This field is used to allow NW to identify the RRC message is sent from which UE. The UE identity information can be generated based on the UE identity included in msg3 during RACH procedure, where includes at least one of below:
UE Identity included in RRC message to request RRC set up (e.g., RRCSetupRequest message)
UE Identity included in RRC message to request RRC Resume (e.g., RRCResumeRequest or RRCResumeRequest1 message)
UE Identity included in RRC message to request RRC reestablishment (e.g. RRCReestablishmentRequest message)
   C-RNTI.

In some embodiments, the UE identity information may be a bit string of varied size or a bit string of a fixed size X.

In some embodiments, when the UE identity information is a bit string of varied size, and can be the same UE identity included in the msg3 transmitted during RACH procedure
In an exemplary embodiment, for the RRC set up procedure, the UE identity information may be the UE identity included in the RRC message to request RRC set up (e.g., RRCSetupRequest message),or
For the RRC Resume procedure, the UE identity information may be the UE identity included in the RRC message to request RRC Resume (e.g., RRCResumeRequest or RRCResumeRequest1 message),or
For the RRC reestablishment procedure, the UE identity information may be the UE identity included in the RRC message to request RRC reestablishment (e.g. RRCReestablishmentRequest message),or
For other cases when C-RNTI is available (e.g., for RRC Reconfiguraion procedure), the UE identity information is C-RNTI.

In another exemplary embodiment, the C-RNTI may also be considered as the UE identity information during the RRC reestablishment procedure.

In some embodiments, the UE identity information is a bit string of fixed size X, and X is a positive integer, and the UE identity can be generated based on the UE identity included in the Msg3 transmitted during RACH procedure considering different situations as given below:
In an exemplary embodiment, When X equals to the bit string length of the UE identity included in the Msg3, the UE identity information has the same value as the UE identity included in Msg3; and when the X is larger than the bit string length of UE identity included in Msg3, the UE identity information can equal to combination of UE identity included in Msg3 and Y bits of random values generated by UE. The Y bits of random value can be placed at the right side or left side of the UE identity. The number Y equals to X minus (the bit string length of UE identity included in Msg3) . By doing so, the total bit string length of UE identity information is still X. When X is smaller than the bit string length of UE identity included in Msg3, the UE identity information can be the X least significant bits (LSBs) and/or X most significant bits (MSBs) of the UE identity included in the Msg3 transmitted during RACH procedure.

In the embodiments of the present disclosure, the Spare bits, which is unused bits reserved for future usage. The field is included in RRC message when early assisting information is transmitted using RRC layer signaling. Reserved bits, which is reserved bits for future usage. The field is included in MAC CE when early assisting information is transmitted using MAC layer signaling. Critical extend fields. Which can be used in the future if there is need for critical extension.

In some embodiments, the early assisting information may be sent in the RRC message, the RRC message segments, the MAC CE or the MAC SDU, or the MAC SDU segments.

In this embodiment, the logical channel for the RRC message specifically to provide early assisting information can be CCCH logical channel or DCCH logical channel. When CCCH logical channel is used, the signaling radio bearer (SRB) for transmission of the new RRC message is SRB0. When DCCH logical channel is used, the SRB type can be SRB1.

In some embodiments, the RRC message specifically to provide early assisting information can be a fixed size RRC message or varied size RRC message. If CCCH logical channel is used for the RRC message specifically to provide early assisting information the CCCH logical channel class may be different depending on the RRC message size. In one example, if it is a 48-bits RRC message, it may be sent from the UE to the Network on the uplink CCCH logical channel. In another example if it is a 64-bits RRC message, it may be sent from the UE to the Network on the uplink CCCH1 logical channel. Or In another example if it is a fixed size RRC message where the size is a value different from 48 and 64, a new UL-CCCH class other than CCCH and CCCH1 (e.g., CCCH2) can be used to transmits the new RRC message.

In an exemplary embodiment of the present disclosure, for example, early assisting information includes the UE identity information, and the UE provides the early assisting information to the base station (or the NW) through the specific RRC message. The configurations of the RRC message are as follows.
Signaling radio bearer: SRB0
RLC-SAP: TM
Logical channel: CCCH
Direction: UE to NW

In this embodiment, the new RRC message (e.g., RRCEarlyInformation message ) is a fixed 48 bits RRC message that can be sent from UE to NW using logical channel CCCH. The RLC mode for the new RRC message is transparent mode (TM mode). The signalling radio bearer to carry the new RRC message is SRB0.

In this embodiment, the content of the RRC early assisting message (RRCEarlylnformation) is as follows:

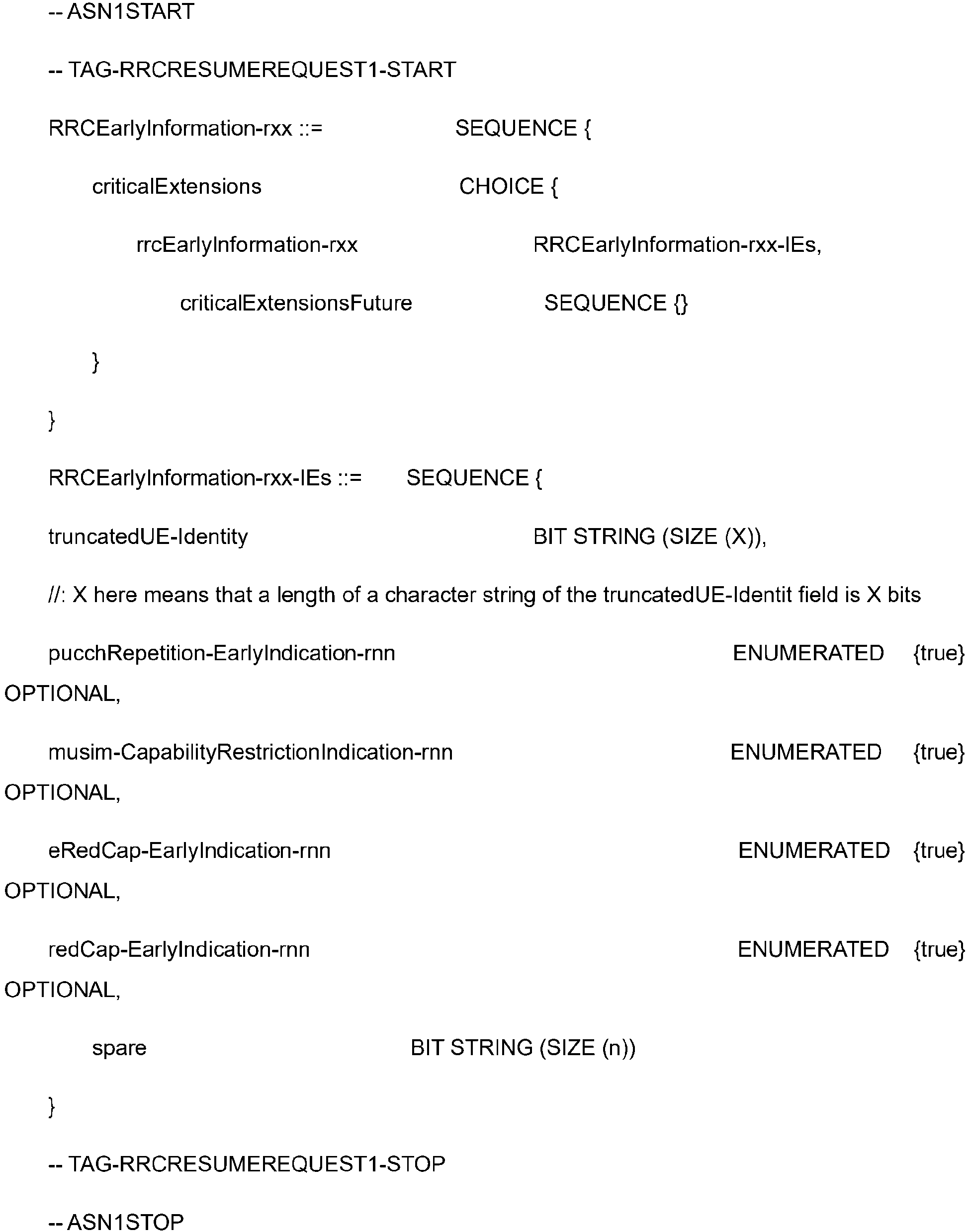

The field names, field positions, and field sizes involved in this embodiment are exemplary, and the present disclosure is not limited thereto. Furthermore, the content included in the embodiments is not limited to what is currently described, that is, other fields may also be included.

In this embodiment, RRCEarlylnformation-IEs field is shown in Table 6.

**Table 6:**

| Field name | Field descriptions |
|---|---|
| truncatedUE-Identity | Truncated UE identity information, which has fixed size of X bits |
| pucchReparin-EarlyIndication | Presence of this field indicates UE is capable or has requested to perform PUCCH repetition for Msg4 HARQ-ACK. Otherwise it is absent. |
| musim-CapabilityRestrictionIndication | Presence of this field indicates MUSIM UE capability is restricted, otherwise it is absent. |
| eRedCap-EarlyIndication | Presence of this field indicates it is an eRedCap UE, otherwise it is absent. |
| RedCap-EarlyIndication | Presence of this field indicates it is RedCap UE, otherwise it is absent. |

In this embodiment, the spare field in the RRC early assisting message (RRCEarlylnformation) is n bits that are not used for now, and maybe used in the future for other purpose. The number n is the remaining bits of the 48 bits that is not used for now. In this example the UE identity is mandatory presented. In another example the UE identity can be optional presented, e.g., it is presented when the message is scheduled by PDCCH scrambled by temporary C-RNTI (TC-RNTI) but if it is scheduled by PDCCH scrambled by C-RNTI this indication is not needed.

In an exemplary embodiment, assuming that a length of the truncated UE-Identity field is equal to a length of the C-RNTI, a truncated UE identity field may include the following several situations.

For the RRC set up procedure, a truncated UE identity refers to least significant X bits of the InitialUE-Identity (initial UE identity) field included in the RRCSetupRequest (RRC establishment request) message.

For the RRC Resume procedure, the truncated UE identity refers to least significant X bits of the resumeldentity (recover identifier) included in the RRCResumeRequest (RRC Resume request) or RRCResumeRequest1 (RRC Resume request 1) message.

For the RRC reestablishment procedure, the UE identity refers to least significant X bits of ReestabUE-Identity (reconstructed UE identity) included in the RRCReestablishmentRequest (RRC reestablishment request) message.

For other situations when the C-RNTI is available, the UE identity may be equal to the value of the C-RNTI.

In another exemplary embodiment, the above truncated UE identity information discussed for the RRC reestablishment procedure may be most significant X bits of ReestabUE-ldentity (reconstructed UE identity) included in the RRCReestablishmentRequest (RRC reestablishment request) message, and the rest part is the same as the above embodiments.

In another exemplary embodiment, other situations when the C-RNTI is available may be used to replace the truncated UE identity information during the RRC reestablishment procedure, and the C-RNTI is a C-RNTI value of ReestabUE-ldentity (reconstructed UE identity) included in the RRCReestablishmentRequest (RRC reestablishment request) message, and the rest part is the same as the above embodiments.

In an exemplary embodiment of the present disclosure, for example, the early assisting information does not include the UE identity information, and the UE provides the early assisting information to the base station (or the NW) through the specific RRC message. The configurations of the RRC message are as follows.
SRB: SRB0
RLC-SAP: TM
Logical channel: CCCH
Direction: UE to NW

In this embodiment, the specific RRC message (e.g., the RRC early assisting message) is the fixed 48-bit RRC message sent to the NW from the UE by using the logical channel CCCH. The radio link control mode for the specific RRC message is the TM. The SRB for carrying the specific RRC message is SRB0.

In this embodiment, the content of the RRC early assisting message (RRCEarlylnformation) is as follows.

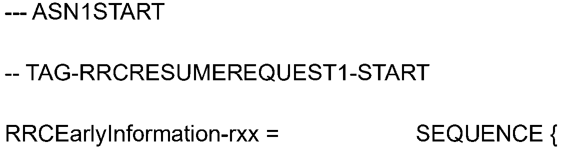

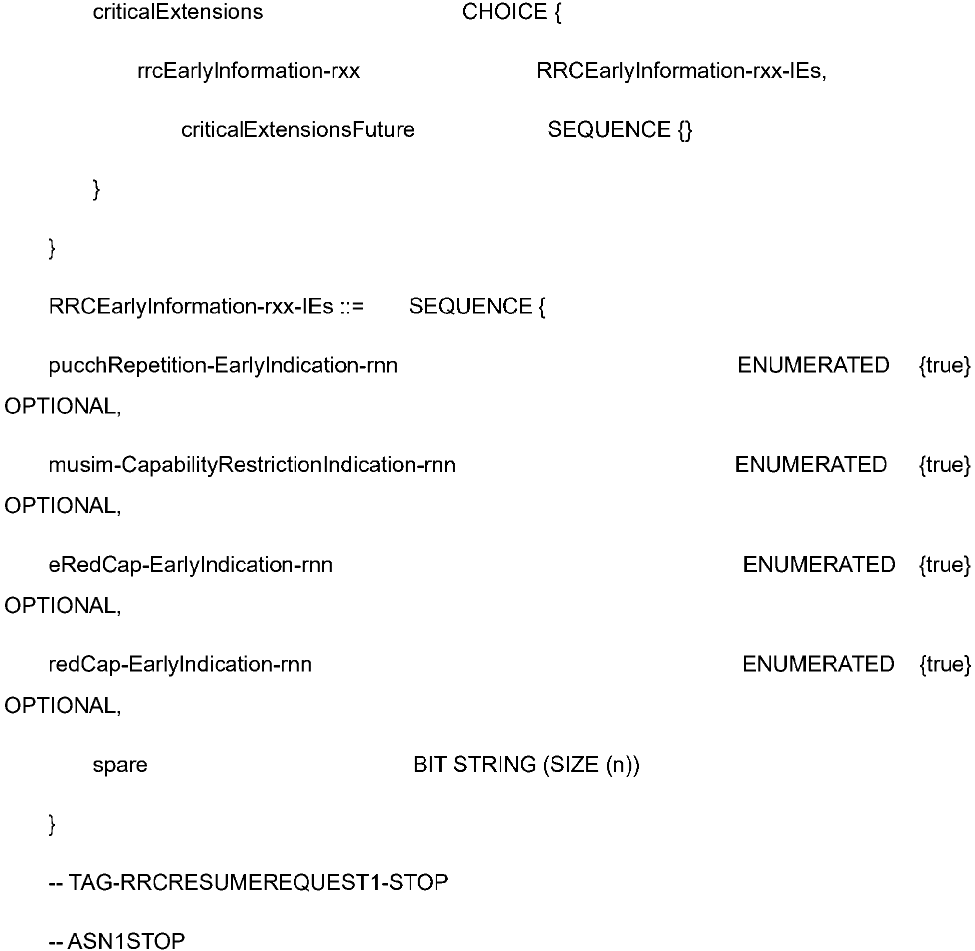

In this embodiment, RRCEarlyInformation-IEs field is shown in Table 7.

**Table 7:**

| Field name | Field descriptions |
|---|---|
| pucchReparin-EarlyIndication | Presence of this field indicates UE is capable or has requested to perform PUCCH repetition for Msg4 HARQ-ACK. Otherwise it is absent. |
| musim-CapabilityRestrictionIndication | Presence of this field indicates that MUSIM UE capability is restricted, otherwise it is absent. |
| eRedCap-Earlylndication | Presence of this field indicates it is an eRedCap UE, otherwise it is absent. |
| RedCap-EarlyIndication | Presence of this field indicates that it is RedCap UE, otherwise it is absent. |

In this embodiment, the spare field indicate n bits that are not used for now, and maybe used in the future for other purpose. The number n is the remaining bits of the 48 bits that is not used for now.

In some embodiments, the early assisting information can be transmitted in MAC layer signaling.

In an exemplary embodiment, an early assisting information MAC CE can be used to report early assisting information from UE to NW, e.g., information relevant to UE capability. The early assisting information MAC CE is octet aligned. In some example the MAC CEs is of varied size. In another example the MAC CEs is of fixed size. In yet another example the MAC CE can be a MAC subheader with no MAC payload, i.e., the MAC payload is of zero bytes.

In this embodiment, the early assisting information MAC CE may include at least one of the early assisting information fields discussed for step 3 or step A in any one of the above embodiments.

In some embodiments of the present disclosure, the reporting of the early assisting information may be implemented through the RRC early assisting message.

In some embodiments, in order to allow NW to differentiate the RRC message or RRC message segments (alternatively a MAC SDU or a MAC SDU segment) providing early assisting information (e.g., RRCEarlylnformation) from other scheduled uplink transmission specified in current standards, a LCID code points selected from reserved LCID reserved bits can be used to identify the RRC message or RRC message segments (alternatively a MAC SDU or a MAC SDU segment) containing early assisting information.

In an exemplary embodiment, when early assisting information is transmitted using RRC layer signalling, the value of the LCID for UL-SCH for identifying the RRC message carrying the early assisting information is shown in Table 8 below.

**Table 8:**

| Coding point/index | LCID value |
|---|---|
| Value m | CCCH of size xx bits to indicate early information from UE to NW (e.g., referred to RRCEarlyinformation message in TS 38.331) xx is an integer mathematical number. Example value can be 48. value m is an integer selected from {47 or 37-42} |

In another exemplary embodiment, when the MAC signalling is used to send the early assisting information, the value of the LCID for UL-SCH for identifying the MAC CE carrying the early assisting information is shown in Table 9 below.

**Table 9:**

| Coding point/index | LCID value |
|---|---|
| Value m | An MAC CE used to indicate early assisting information from UE to NW. m is an integer mathematical value. |

In some embodiments, DCI for scheduling the early assisting information may be monitored by configuring a dedicated resource.

In some embodiments, After transmission of Msg3 or MsgA indicating request to transmits RRC message for early assisting information, UE searches Downlink Control Information (DCI) in the PDCCH resource configured, and performs subsequent transmission based on the scheduling information included in Downlink Control Information (DCI). For example, transmitting the RRC message (e.g., RRCEarlylnformation message) or RRC message segment (alternatively, MAC CE, MAC SDU, or MAC SDU segment) carrying the early assisting information.

In an exemplary embodiment, It is possible that both UE with and without the capability to support RRC message for early assisting information will exist in the system and they can share the same common physical layer RACH resource configured. In this case the scheduling information contained in DCI scheduling RRC message for early assisting information and DCI scheduling RRC message not for early assisting information may be different, therefore to guarantee that only UE has sent request for RRC message for early assisting information will receive the corresponding DCI scheduling RRC message for early information, at least one of below options can be considered:
Option 1: a dedicated search space (SS) can be configured for UE to monitor the DCI scheduling RRC message for early assisting information

Exemplarily, after transmission of message indicating UE's request to send early assisting information, UE monitors the DCI on the SS specifically configured for monitor DCI scheduling RRC message for early assisting information.

Option 2: a dedicated CORESET configuration can be configured for UE to monitoring the DCI scheduling RRC message for early assisting information.

Exemplarily, after the UE transmits a request indicating that the early assisting information is about to be sent, the DCI is monitored on the CORESET, and the CORESET is particularly configured to monitor the DCI for scheduling early assisting message transmission.

Option 3: different RNTI value ranges for monitoring the DCI scheduling RRC message for early assisting information.

Exemplarily, at least one of below cases can be considered for this option:
If UE has received TC-RNTI in the Random access response scheduling the Msg3 transmission, and the Msg3 contains message indicating request to send early assisting information, an enhanced TC-RNTI can be used to monitor the DCI scheduling RRC message for early assisting information. For example, the enhanced TC-RNTI value can equals to TC-RNTI received in the random access response scheduling the Msg3 transmission plus an RNTI offset. If the enhanced TC-RNTI value has a value range different from the value range of original TC-RNTI, then it is guaranteed that the DCI scheduling RRC message for early assisting information will not be received by UE not indicate request of sending early assisting information.

Exemplarily, UE monitors PDCCH using MsgB-RNTI if UE transmitted MsgA previously, and the MsgA contains message indicating request to send early assisting information. For example, a value of the enhanced MsgB-RNTI is equal to MsgB-RNTI plus the RNTI offset. If the value of the enhanced MsgB-RNTI is different from a value range of original MsgB-RNTI, it ensures that only the UE that requests the reporting of the early assisting message receives the DCI for scheduling early assisting message transmission.

In some embodiments, the DCI format used to schedule transmission of RRC message for early assisting information may include at least one of the following information:
Information to indicate Acknowledge that NW has successfully received the RRC message for early assisting information. In one example this field can be present by one bit indication, which indicates whether NW has successfully received the previous scheduled RRC message for early assisting information. For example, value 1 indicates NW has successfully received the previous scheduled RRC message for early assisting information while value zero means NW doesn't receive the previous scheduled RRC message for early assisting information. Or vice versa, the present disclosure is not limited thereto.

Information whether it is to schedule RRC message for early assisting information or not. In one example this field can be present by one bit indication, where value 1 indicates that the DCI is to schedule RRC message for early assisting information, while value zero means it is not to schedule RRC message for early assisting information. Or vice versa, the present disclosure is not limited thereto.

Indication to indicate whether NW is to schedule UE for a new transmission or a retransmission. If the value indicated in this field compared to the DCI scheduling the same HARQ procedure received last time has been changed, then UE consider it is a new transmission. In one example, if it is the first time UE receives the DCI scheduling the RRC message for early assisting information, UE always assumes it is a new transmission regardless the value indicated in this field.

Time domain resource information to indicate when UE shall perform the scheduled transmission.

Frequency domain resource information to indicate at which frequency band UE is scheduled to perform the transmission.

HARQ procedure number, to indicate the HARQ procedure used for scheduled transmission.

In some embodiments, a UE buffer can be introduced to store the RRC message for early assisting information. The buffer is to allow temporary storing the content of RRC message for early assisting information for possible retransmission.

In some embodiments, conditions to flush the buffer or clean the buffer may include at least one of the following:
Upon receiving positive feedback from NW indicating that the previous sent RRC message for early assisting information has been successfully received by the NW;
Upon completion of RACH procedure;
Upon receiving DCI from NW indicates UE to perform a new transmission on the HARQ procedure used to transmits the RRC message for early assisting information.

Through the embodiments of the present disclosure, the specific MAC subheader, MAC CE, MAC SDU, MAC SDU segment, specific RRC message, or RRC message segment may be designed to provide the early assisting information for the base station, and the early assisting information is transmitted through the PUSCH without increasing the message size, such that the problem of limited number of coding points of an LCID and poor flexibility with respect to the indication of assisting information during a RACH procedure by using the LCID in the related art is solved.

Another aspect of the embodiments of the present disclosure provides a terminal, which is configured to receive, from a base station, configuration information relevant to early assisting information report; and send an MAC PDU to the base station according to the configuration information, where the MAC PDU includes a specific MAC subheader carrying an early assisting information field.

In the embodiments of the present disclosure, the terminal may execute steps in any one of the terminal side method embodiments.

Another aspect of the embodiments of the present disclosure provides a base station, which is configured to send, to a terminal, configuration information relevant to early assisting information report; and receive an MAC PDU sent by the terminal according to the configuration information, where the MAC PDU includes a specific MAC subheader carrying an early assisting information field.

In the embodiments of the present disclosure, the base station may execute steps in any one of the base station side method embodiments.

Embodiments of the present disclosure further provide a computer-readable storage medium. The computer-readable storage medium stores a computer program. Steps in any one of the above method embodiments are executed when the computer program is run by a processor.

In an exemplary embodiment, the computer-readable storage medium may include, but is not limited to, a USB flash disk, a Read-Only Memory (ROM), a Random Access Memory (RAM), and various media that can store computer programs, such as a mobile hard disk, a magnetic disk, or an optical disk.

An embodiment of the present disclosure further provides an electronic apparatus. The electronic apparatus includes a memory and a processor. The memory is configured to store a computer program. The processor is configured to run the computer program to execute steps in any one of method embodiments described above.

In an exemplary embodiment, the electronic apparatus may further include a transmission device and an input/output device. The transmission device is connected to the processor. The input/output device is connected to the processor.

For specific examples in this embodiment, refer to the examples described in the foregoing embodiments and the exemplary implementations, and this embodiment will not be repeated thereto.

It is apparent that those skilled in the art should understand that the above mentioned modules or steps of the present disclosure may be implemented by a general computing device, and may also be gathered together on a single computing device or distributed in network composed of multiple computing devices. The above mentioned modules or steps of the present disclosure may be implemented with program codes executable by the computing device, so that may be stored in a storage device for execution by the computing device, and in some cases, the steps shown or described may be performed in a different sequence than herein, or can be fabricated into individual integrated circuit modules respectively, or multiple modules or steps thereof are fabricated into a single integrated circuit module for implementation. In this way, the present disclosure is not limited to any specific combination of hardware and software.

The above are only the preferred embodiments of the present disclosure and are not intended to limit the present disclosure. For those skilled in the art, the present disclosure may have various modifications and variations. Any modifications, equivalent replacements, improvements and the like made within the principle of the disclosure shall fall within the scope of protection of the present disclosure.

## Claims

1. An early assisting information report method, applied to a terminal and comprising:
receiving, from a base station, configuration information relevant to early assisting information report; and
sending a Media Access Control Protocol Data Unit (MAC PDU) to the base station according to the configuration information, wherein the MAC PDU comprises a specific MAC subheader carrying an early assisting information field.

2. The method according to claim 1, wherein the configuration information comprises: an explicit indication and/or an implicit indication for indicating whether the specific MAC subheader is enabled.

3. The method according to claim 2, wherein the implicit indication comprises at least one of the following:
automatic retransmission configuration information of Msg4 Hybrid Automatic Repeat Request-ACKnowledgement (HARQ-ACK);
temporary capability limitation related configuration information of a Multi User Identification Module (MUSIM) terminal;
Reduced Capability (RedCap) terminal configuration information;
Enhanced Reduced Capability (eRedCap) terminal configuration information;
Random Access Channel (RACH) resource configuration information dedicated to early assisting information report;
a mapping relationship between a specific MAC subheader format and a RACH resource;
terminal capability information;
Random Access Channel (RACH) process trigger information; or
initial access process trigger information.

4. The method according to claim 1, wherein the configuration information is configuration information based on a cell, configuration information based on a RACH resource, or configuration information based on a RACH resource set.

5. The method according to claim 1, wherein receiving, from the base station, the configuration information relevant to early assisting information report comprises at least one of the following:
receiving, from the base station, System Information (SI) carrying the configuration information, wherein the SI comprises at least one System Information Block 1 (SIB1) message or SIBx Information Element (IE), and the SIBx IE comprises at least one SIB;
receiving, from the base station, a broadcast message carrying the configuration information;
receiving, from the base station, a multicast message carrying the configuration information; or
receiving, from the base station, Radio Resource Control (RRC) signalling carrying the configuration information.

6. The method according to claim 1, wherein the specific MAC subheader comprises at least one of the following:
a flag bit of the specific MAC subheader;
a message type field of a common control channel (CCCH) message; or
the early assisting information field.

7. The method according to claim 1, wherein a message type of the CCCH message comprises at least one of the following:
a 48-Bit CCCH or a 64-bit CCCH1; or
for a Reduced Capability (RedCap) terminal or for a non-RedCap terminal.

8. The method according to claim 1, wherein an indication mode of the early assisting information field comprises at least one of the following:
the early assisting information field comprising at least one piece of bit information, wherein each piece of the bit information indicates one piece of early assisting information;
a value of the early assisting information field being determined by a formula comprising the early assisting information field of at least one sub-field, wherein each sub-field indicates one piece of the early assisting information, and the formula of the early assisting information field is determined based on a value of the at least one sub-field and the number of candidate values of each sub-field; or
a Logical Channel IDentify (LCID) index, wherein the LCID index is configured to indicate one or more pieces of the early assisting information.

9. The method according to claim 8, wherein the formula of the early assisting information field comprises:
the value of the early assisting information field = a value of a first sub-field+a value of a second sub-field*the number of candidate values of the first sub-field+a value of a third sub-field*(the number of candidate values of the second sub-field+the number of candidate values of the first sub-field)+...+a value of nth sub-field*(the number of candidate values of (n-1)th sub-field+...+the number of candidate values of the second sub-field+the number of candidate values of the first sub-field)), wherein n is a positive integer.

10. The method according to claim 8, wherein the early assisting information comprises at least one of the following:
indication information for indicating whether the terminal supports or requests an automatic repeat request against a Physical Uplink Control Channel (PUCCH) of Msg4 Hybrid Automatic Repeat Request-ACKnowledgement (HARQ-ACK);
indication information for indicating whether the terminal capability of the terminal is temporarily restricted;
indication information for indicating whether the terminal supports a Reduced Capability (RedCap); or
indication information for indicating whether the terminal supports an Enhanced Reduced Capability (eRedCap).

11. The method according to claim 1, wherein the MAC PDU comprises a plurality of MAC subPDUs, wherein each MAC subPDU is composed of one of the following:
an MAC subheader;
the MAC subheader and an MAC Service Data Unit (SDU);
the MAC subheader and an MAC Control Element (CE); or
the MAC subheader and padding.

12. The method according to claim 1, wherein sending the MAC PDU to the base station according to the configuration information comprises:
in a third step of four-step random access, or in a first step of two-step random access, sending the MAC PDU to the base station according to the configuration information.

13. An early assisting information report method, applied to a base station and comprising:
sending, to a terminal, configuration information relevant to early assisting information report; and
receiving a Media Access Control Protocol Data Unit (MAC PDU) sent by the terminal according to the configuration information, wherein the MAC PDU comprises a specific MAC subheader carrying an early assisting information field.

14. A terminal, configured to receive, from a base station, configuration information relevant to early assisting information report; and send a Media Access Control Protocol Data Unit (MAC PDU) to the base station according to the configuration information, wherein the MAC PDU comprises a specific MAC subheader carrying an early assisting information field.

15. A base station, configured to send, to a terminal, configuration information relevant to early assisting information report; and receive a Media Access Control Protocol Data Unit (MAC PDU) sent by the terminal according to the configuration information, wherein the MAC PDU comprises a specific MAC subheader carrying an early assisting information field.

16. A computer-readable storage medium, having a computer program stored therein, wherein the computer program is configured to, when executed by a processor, implement the method as claimed in any one of claims 1 to 13.

17. An electronic apparatus, comprising a memory and a processor, wherein the memory stores a computer program, and the processor is configured to execute the computer program to perform the method as claimed in any one of claims 1 to 13.
